# EUROPEAN PATENT SPECIFICATION

(11) **EP 4 206 612 B1**
(45) Date of publication and mention of the grant of the patent: **27.05.2026**
(21) Application number: 21860917.0
(22) Date of filing: 10.06.2021
(51) Int. Cl.: G01C 21/26, G01C 21/34, G01C 21/36, G09B 29/10, G08G 1/0962, G08G 1/0967, G08G 1/0968, G08G 1/14

(54) **DRIVING ASSISTANCE DEVICE AND COMPUTER PROGRAM**
FAHRASSISTENZVORRICHTUNG UND COMPUTERPROGRAMM
DISPOSITIF D'AIDE À LA CONDUITE ET PROGRAMME INFORMATIQUE

(30) Priority: 28.08.2020 JP 2020144591
(43) Date of publication of application: 05.07.2023
(73) Proprietor: AISIN CORPORATION, Kariya-shi, Aichi 448-8650 (JP)
(72) Inventor: NIMURA, Mitsuhiro, Kariya-shi, Aichi 448-8650 (JP)
(74) Representative: Cabinet Beau de Loménie
(86) International application number: PCT/JP2021/022124
(87) International publication number: WO 2022/044486

(56) References cited:
- EP-A1- 4 234 353
- WO-A1-2007/116650
- CN-A- 107 507 448
- CN-A- 111 192 475
- JP-A- 2006 194 638
- JP-A- 2008 002 978
- JP-A- 2012 185 086
- JP-A- 2017 117 080
- JP-A- 2017 167 046
- JP-A- 2017 181 392
- JP-A- 2018 021 887
- JP-A- 2019 087 188
- JP-A- 2019 105 789
- JP-A- 2020 008 401
- KR-A- 20180 069 174
- KR-B1- 100 798 658
- US-A1- 2017 060 133
- US-A1- 2019 063 947
- US-A1- 2020 018 602
- US-A1- 2020 130 676

## Description

### TECHNICAL FIELD

The present invention relates to a driving assistance device and a computer program that provide driving assistance for a vehicle.

### BACKGROUND ART

When a vehicle moves to a destination, generally, the vehicle moves to a parking lot belonging to the destination or a parking lot around the destination and is parked, and a user moves on foot to a point that is the destination from a parking space in the parking lot in which the vehicle is parked, by which the movement is completed. For example, JP 2008-241602 A and WO 2007/116650 A1disclose techniques in which when a destination is set, an entrance to a parking lot belonging to the destination is identified, and a course to a link connected to the identified entrance to the parking lot is searched. US 2020/018602 A1 discloses a method and a system for guiding users in a parking facility.

### CITATIONS LIST

### PATENT LITERATURE

Patent Literature 1: JP 2008-241602 A (pp. 13-17 and FIG. 6)
Patent Literature 2: WO 2007/116650 A1
Patent Literature 3: US 2020/018602 A1

### SUMMARY OF INVENTION

### TECHNICAL PROBLEMS

In the technique of the above-described Patent Literature 1, although a course to a link connected to an entrance to a parking lot is searched, a travel path to a point in the parking lot taken thereafter is not generated. The technique of the above-described Patent Literature 1 has a problem of not considering how to enter the parking lot from the link connected to the entrance to the parking lot.

The present invention is made to solve the above-described conventional problem, and provides a driving assistance device and a computer program that can identify a recommended travel path from a travel start point to a parking lot that is where to park a vehicle, using connection information indicating a connection relationship between lanes included in an entry road facing an entrance to the parking lot and the entrance to the parking lot, and that can appropriately provide driving assistance.

### SOLUTIONS TO PROBLEMS

To provide the above-described driving assistance device, a driving assistance device according to the present invention is defined by claim 1.

Note that the term "travel path" may be information that identifies a specific path (a set of coordinates or a line) along which the vehicle travels, or may be such a level of information that does not identify a specific path but can identify roads and lanes where the vehicle is to travel (i.e., a way of the vehicle moving into lanes).

In addition, a computer program according to the present invention is a program as defined by claim 5.

### ADVANTAGEOUS EFFECTS OF INVENTION

According to the driving assistance device and the computer program according to the present invention that have the above-described configurations, by using connection information indicating a connection relationship between lanes included in an entry road facing an entrance to a parking lot and the entrance to the parking lot, it becomes possible to identify a recommended travel path from a travel start point to a parking lot that is where to park a vehicle. Then, by providing driving assistance based on the identified travel path, driving assistance can be appropriately provided.

### BRIEF DESCRIPTION OF DRAWINGS

FIG. 1 is a schematic configuration diagram showing a driving assistance system according to the present embodiment.
FIG. 2 is a block diagram showing a configuration of the driving assistance system according to the present embodiment.
FIG. 3 is a block diagram showing a navigation device according to the present embodiment.
FIG. 4 is a flowchart of an autonomous driving assistance program according to the present embodiment.
FIG. 5 is a diagram showing an area for which highly accurate map information is obtained.
FIG. 6 is a diagram describing a method of calculating a dynamic travel path.
FIG. 7 is a flowchart of a subprocess program of a static travel path generating process.
FIG. 8 is a diagram showing an example of candidate courses to a parking lot.
FIG. 9 is a diagram showing an example of lane networks constructed for the candidate courses shown in FIG. 8.
FIG. 10 is a diagram showing examples of lane flags indicating a correspondence between lanes included in a road before passing through an intersection and lanes included in a road after passing through the intersection.
FIG. 11 is a diagram showing an example of a parking network constructed for a parking lot.
FIG. 12 is a diagram showing an example of a walk network constructed for a section from a parking lot to a facility which is a destination.
FIG. 13 is a diagram showing examples of connection information.
FIG. 14 is a diagram showing a relationship between the number of lane changes and lane costs.
FIG. 15 is a diagram showing a relationship between travel lanes and lane costs.
FIG. 16 is a diagram showing a relationship between a location at which a lane change is made and a lane cost.
FIG. 17 is a diagram describing a method of identifying a location recommended to make a lane change.
FIG. 18 is a diagram showing an example of a travel path recommended upon passing through an intersection.
FIG. 19 is a diagram showing an example of a travel path recommended upon entering an entrance to a parking lot.
FIG. 20 is a diagram showing an example of a travel path recommended upon parking a vehicle in a parking space.
FIG. 21 is a flowchart of a subprocess program of a speed plan creating process.
FIG. 22 is a diagram showing an example of a speed plan.

### DESCRIPTION OF EMBODIMENTS

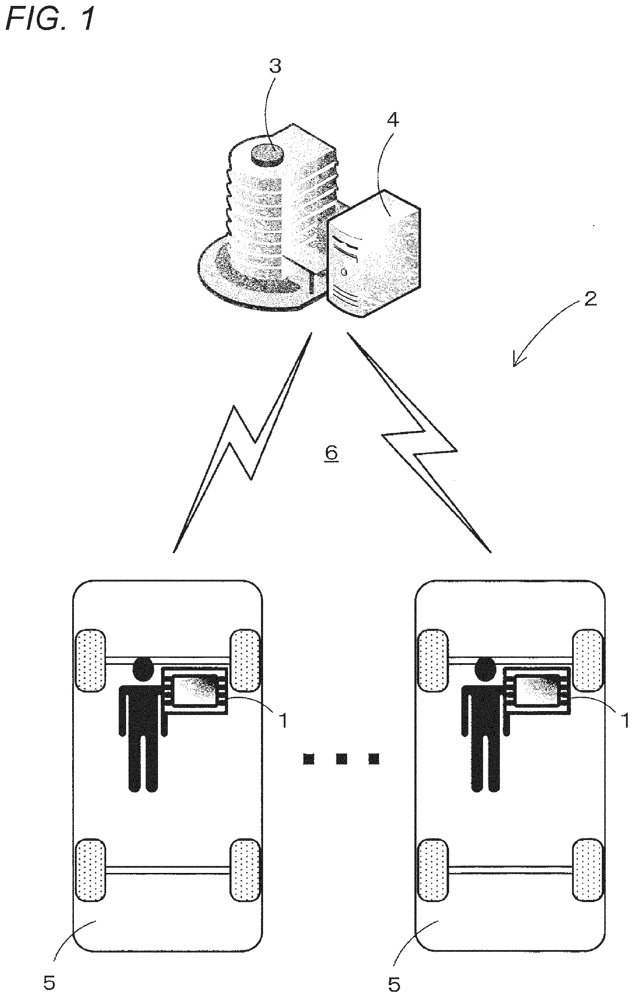

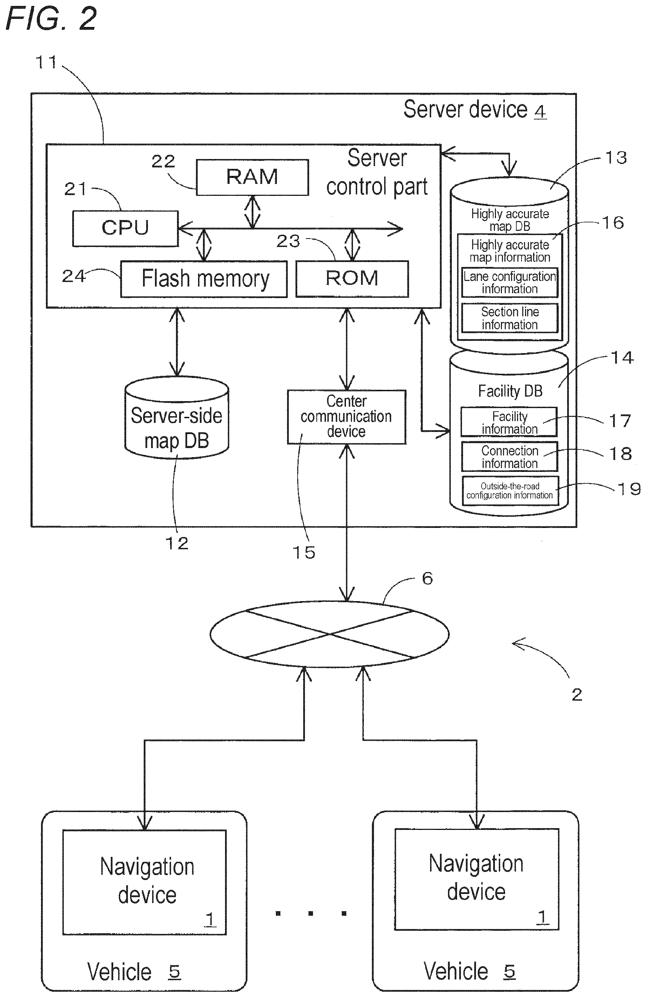

One embodiment in which a driving assistance device according to the present invention is embodied into a navigation device 1 will be described in detail below with reference to the drawings. First, a schematic configuration of a driving assistance system 2 including navigation devices 1 according to the present embodiment will be described using FIGS. 1 and 2. FIG. 1 is a schematic configuration diagram showing the driving assistance system 2 according to the present embodiment. FIG. 2 is a block diagram showing a configuration of the driving assistance system 2 according to the present embodiment.

As shown in FIG. 1, the driving assistance system 2 according to the present embodiment basically includes a server device 4 provided in an information delivery center 3; and navigation devices 1 mounted on vehicles 5 to provide various types of assistance related to autonomous driving of the vehicles 5. In addition, the server device 4 and the navigation devices 1 are configured to be able to perform transmission and reception of electronic data with each other through a communication network 6. Note that instead of the navigation devices 1, other in-vehicle devices mounted on the vehicles 5 or vehicle control devices that perform control related to the vehicles 5 may be used.

Here, the vehicles 5 each are a vehicle that can perform assistance travel by autonomous driving assistance in which the vehicle autonomously travels along a preset course or a road independently of user's driving operations, in addition to manual driving travel in which the vehicle travels based on user's driving operations.

In addition, autonomous driving assistance may be provided for all road sections or may be configured to be provided only while the vehicle travels on a specific road section (e.g., an expressway having a gate (it does not matter whether or not there is a person or whether or not a toll is collected) at a boundary). The following description is made assuming that autonomous driving sections in which autonomous driving assistance for the vehicle is provided include parking lots in addition to all road sections including general roads and expressways, and that autonomous driving assistance is basically provided during a period from when the vehicle starts traveling until the vehicle finishes traveling (until the vehicle is parked). Note, however, that it is desirable that instead of always providing autonomous driving assistance when the vehicle travels on an autonomous driving section, autonomous driving assistance be provided only in a situation in which a user has selected provision of autonomous driving assistance (e.g., an autonomous driving start button is turned on) and it is determined that travel by autonomous driving assistance can be performed. On the other hand, the vehicles 5 may be vehicles that can only perform assistance travel by autonomous driving assistance.

In vehicle control performed during autonomous driving assistance, for example, a current location of the vehicle, a lane in which the vehicle travels, and the location of an obstacle around the vehicle are detected whenever necessary, and control of the vehicle, e.g., steering, a drive source, and a brake, is autonomously performed so that the vehicle travels along a travel path generated by the navigation device 1 and at a speed in accordance with a speed plan created likewise, as will be described later. Note that in assistance travel by autonomous driving assistance of the present embodiment, for a lane change, a left or right turn, and a parking operation, too, the vehicle travels by performing the above-described vehicle control by autonomous driving assistance, but a configuration may be adopted in which special travel such as a lane change, a left or right turn, and a parking operation is performed by manual driving instead of performing travel by autonomous driving assistance.

Meanwhile, the navigation devices 1 each are an in-vehicle device mounted on a vehicle 5 to display a map of an area around the location of the vehicle 5 based on map data provided in the navigation device 1 or map data obtained from an external source, perform input of a user's destination, display a current location of the vehicle on a map image, or provide movement guidance in accordance with a set guidance course. In the present embodiment, particularly, when the vehicle performs assistance travel by autonomous driving assistance, various types of assistance information about the autonomous driving assistance are generated. The assistance information includes, for example, a travel path recommended for the vehicle to travel along (including a recommended way of moving into lanes) and a speed plan indicating vehicle speed used upon traveling. Note that details of the navigation device 1 will be described later.

In addition, the server device 4 can also perform a course search in response to a request from a navigation device 1. Specifically, information required for a course search such as a point of departure and a destination is transmitted together with a course search request from a navigation device 1 to the server device 4 (note, however, that in a case of re-searching, information about a destination does not necessarily need to be transmitted). Then, the server device 4 having received the course search request performs a course search using map information provided in the server device 4, to identify a recommended course from the point of departure to the destination. Thereafter, the identified recommended course is transmitted to the navigation device 1 which is a source of the request. Then, the navigation device 1 can provide a user with information about the received recommended course, and can also generate, using the recommended course, various types of assistance information about autonomous driving assistance as will be described later.

Furthermore, the server device 4 has highly accurate map information which is map information with a higher degree of accuracy, separately from normal map information used for the above-described course search; and facility information. The highly accurate map information includes, for example, information about the lane configurations of roads (lane-by-lane road configurations, curvatures, lane widths, etc.) and section lines (roadway centerlines, lane boundary lines, roadway outer lines, guidelines, etc.) painted on the roads. In addition to the information, the highly accurate map information also includes information about intersections, etc. On the other hand, the facility information is more detailed information about facilities that is stored separately from information about facilities included in the map information. The facility information includes, for example, information about entrances to parking lots and connection information indicating a connection relationship between an entrance to a parking lot and lanes. The server device 4 delivers highly accurate map information and facility information in response to a request from a navigation device 1, and the navigation device 1 generates various types of assistance information about autonomous driving assistance as will be described later, using the highly accurate map information and facility information delivered from the server device 4. Note that the highly accurate map information is basically map information targeting only roads (links) and areas around the roads, but may be map information that also includes areas other than the areas around the roads.

Note, however, that the above-described course search process does not necessarily need to be performed by the server device 4, and if a navigation device 1 has map information, then the navigation device 1 may perform the course search process. In addition, highly accurate map information and facility information may be provided in advance in the navigation device 1, instead of being delivered from the server device 4.

In addition, the communication network 6 includes multiple base stations disposed all over the country and telecommunications companies that manage and control their base stations, and is formed by mutually connecting the base stations to the telecommunications companies by wire (optical fiber, ISDN, etc.) or wirelessly. Here, the base stations each include a transceiver and an antenna that perform communication with the navigation devices 1. While the base station performs radio communication with a telecommunications company, the base station serves as an end of the communication network 6 and plays a role in relaying communication of navigation devices 1 present in an area (cell) in which radio waves from the base station reach, to the server device 4.

Next, a configuration of the server device 4 in the driving assistance system 2 will be described in more detail using FIG. 2. The server device 4 includes, as shown in FIG. 2, a server control part 11, a server-side map DB 12 connected to the server control part 11 and serving as information recording means, a highly accurate map DB 13, a facility DB 14, and a server-side communication device 15.

The server control part 11 is a control unit (an MCU, an MPU, etc.) that performs overall control of the server device 4, and includes a CPU 21 serving as a computing device and a control device; and internal storage devices such as a RAM 22 used as a working memory when the CPU 21 performs various types of arithmetic processing, a ROM 23 having recorded therein a program for control, etc., and a flash memory 24 that stores a program read from the ROM 23. Note that the server control part 11 includes various types of means serving as processing algorithms with an ECU of a navigation device 1 which will be described later.

Meanwhile, the server-side map DB 12 is storage means for storing server-side map information which is the latest version of map information registered based on input data from an external source and input operations. Here, the server-side map information includes a road network and various types of information required for a course search, course guidance, and map display. The server-side map information includes, for example, network data including nodes and links that indicate a road network, link data about roads (links), node data about node points, intersection data about each intersection, point data about points such as facilities, map display data for displaying a map, search data for searching for a course, and retrieval data for retrieving a point.

In addition, the highly accurate map DB 13 is storage means for storing highly accurate map information 16 which is map information with a higher degree of accuracy than the above-described server-side map information. The highly accurate map information 16 is particularly map information that stores more detailed information about roads and facilities where vehicles are to travel, and in the present embodiment, the highly accurate map information 16 includes, for example, for roads, information about lane configurations (lane-by-lane road configurations, curvatures, lane widths, etc.) and section lines (roadway centerlines, lane boundary lines, roadway outer lines, guidelines, etc.) painted on the roads. Furthermore, the highly accurate map information 16 records data representing road gradients, cants, banks, merge sections, a location where the number of lanes decreases, a location where the width becomes narrower, railroad crossings, etc., and records: for a corner, data representing the radius of curvature, an intersection, a T-junction, the entry and exit of the corner, etc.; for road attributes, data representing downhill slopes, uphill slopes, etc.; and for road types, data representing general roads such as national highways, prefectural highways, and narrow streets, and toll roads such as national expressways, urban expressways, automobile roads, general toll roads, and toll bridges. Particularly, in the present embodiment, the highly accurate map information 16 also stores information that identifies, in addition to the number of lanes on roads, a passage segment in a traveling direction for each lane and a connection between roads for each lane (specifically, a correspondence between lanes included in a road before passing through an intersection and lanes included in a road after passing through the intersection). Furthermore, the highly accurate map information 16 also stores speed limits set for roads.

On the other hand, the facility DB 14 is storage means for storing more detailed information about facilities than information about facilities stored in the above-described server-side map information. Specifically, as facility information 17, there are included, particularly, for a parking lot that is where to park a vehicle (also including a parking lot provided by a facility and an independent parking lot), information that identifies the locations of an entrance and an exit of the parking lot, information that identifies a layout of parking spaces in the parking lot, information about section lines that mark off the parking spaces, and information about passages through which vehicles and pedestrians can pass. For a facility other than parking lots, there is included information that identifies the entrance and exit of the facility and passages in the facility through which users (pedestrians) can pass. The facility information 17 may be particularly information generated by 3D modeling of parking lots and facilities. Furthermore, the facility DB 14 also includes connection information 18 indicating a connection relationship between lanes included in an entry road facing an entrance to a parking lot and the entrance to the parking lot; and outside-the-road configuration information 19 that identifies a region between the entry road and the entrance to the parking lot through which vehicles can pass. Details of each piece of information stored in the facility DB 14 will be described later.

Note that the highly accurate map information 16 is basically map information targeting only roads (links) and areas around the roads, but may be map information that also includes areas other than the areas around the roads. In addition, although in the example shown in FIG. 2, server-side map information stored in the server-side map DB 12 and information stored in the highly accurate map DB 13 and the facility DB 14 are different pieces of map information, the information stored in the highly accurate map DB 13 and the facility DB 14 may be a part of the server-side map information. In addition, the highly accurate map DB 13 and the facility DB 14 may be a single database instead of being separated from each other.

Meanwhile, the server-side communication device 14 is a communication device for performing communication with the navigation device 1 of each vehicle 5 through the communication network 6. In addition, it is also possible to receive traffic information including pieces of information such as congestion information, regulation information, and traffic accident information that are transmitted from an Internet network, traffic information centers, e.g., a VICS (registered trademark: Vehicle Information and Communication System) center, etc., in addition to the navigation devices 1.

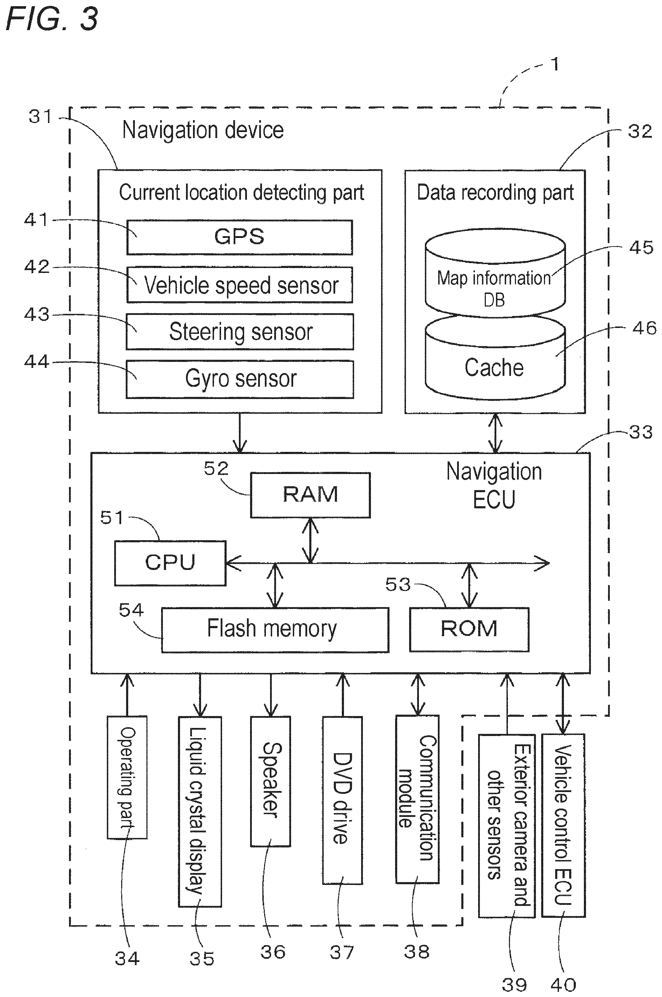

Next, a schematic configuration of the navigation device 1 mounted on the vehicle 5 will be described using FIG. 3. FIG. 3 is a block diagram showing the navigation device 1 according to the present embodiment.

As shown in FIG. 3, the navigation device 1 according to the present embodiment includes a current location detecting part 31 that detects a current location of a vehicle having the navigation device 1 mounted thereon; a data recording part 32 having various types of data recorded therein; a navigation ECU 33 that performs various types of arithmetic processing based on inputted information; an operating part 34 that accepts operations from a user; a liquid crystal display 35 that displays to the user, for example, a map of an area around the vehicle and information about a guidance course (a planned travel course of the vehicle) set on the navigation device 1; a speaker 36 that outputs voice guidance about course guidance; a DVD drive 37 that reads a DVD which is a storage medium; and a communication module 38 that performs communication with information centers such as a probe center and a VICS center. In addition, an exterior camera 39 and various types of sensors that are installed on the vehicle having the navigation device 1 mounted thereon are connected to the navigation device 1 through an in-vehicle network such as a CAN. Furthermore, the navigation device 1 is also connected to a vehicle control ECU 40 in a two-way communicable manner that performs various types of control on the vehicle having the navigation device 1 mounted thereon.

The components included in the navigation device 1 will be described in turn below.

The current location detecting part 31 includes a GPS 41, a vehicle speed sensor 42, a steering sensor 43, a gyro sensor 44, etc., and can detect the current vehicle location and orientation, a travel speed of the vehicle, a current time, etc. Here, particularly, the vehicle speed sensor 42 is a sensor for detecting the moving distance and vehicle speed of the vehicle, and generates pulses according to the rotation of drive wheels of the vehicle and outputs a pulse signal to the navigation ECU 33. Then, the navigation ECU 33 calculates the rotational speed of the drive wheels and a moving distance by counting the generated pulses. Note that the navigation device 1 does not need to include all of the above-described four types of sensors, and may be configured to include only one or a plurality of types of sensors among those sensors.

In addition, the data recording part 32 includes a hard disk (not shown) serving as an external storage device and a recording medium; and a recording head (not shown) which is a driver for reading a map information DB 45 recorded on the hard disk, a cache 46, a predetermined program, etc., and for writing predetermined data to the hard disk. Note that the data recording part 32 may include a flash memory, a memory card, or an optical disc such as a CD or a DVD, instead of a hard disk. In addition, in the present embodiment, as described above, the server device 4 searches for a course to a destination, and thus, the map information DB 45 may be omitted. Even when the map information DB 45 is omitted, it is also possible to obtain map information from the server device 4 as necessary.

Here, the map information DB 45 is storage means having stored therein, for example, link data about roads (links), node data about node points, search data used in processes related to a course search or change, facility data about facilities, map display data for displaying a map, intersection data about each intersection, and retrieval data for retrieving a point.

On the other hand, the cache 46 is storage means for saving highly accurate map information 16, facility information 17, connection information 18, and outside-the-road configuration information 19 that have been delivered from the server device 4 in the past. A saving period can be set as appropriate, and may be, for example, a predetermined period (e.g., one month) after storage or a period until an ACC power supply (accessory power supply) of the vehicle is turned off. In addition, after the amount of data stored in the cache 46 reaches an upper limit, the data may be sequentially deleted in order from oldest to newest. Then, the navigation ECU 33 generates various types of assistance information about autonomous driving assistance, using the highly accurate map information 16, facility information 17, connection information 18, and outside-the-road configuration information 19 stored in the cache 46. Details will be described later.

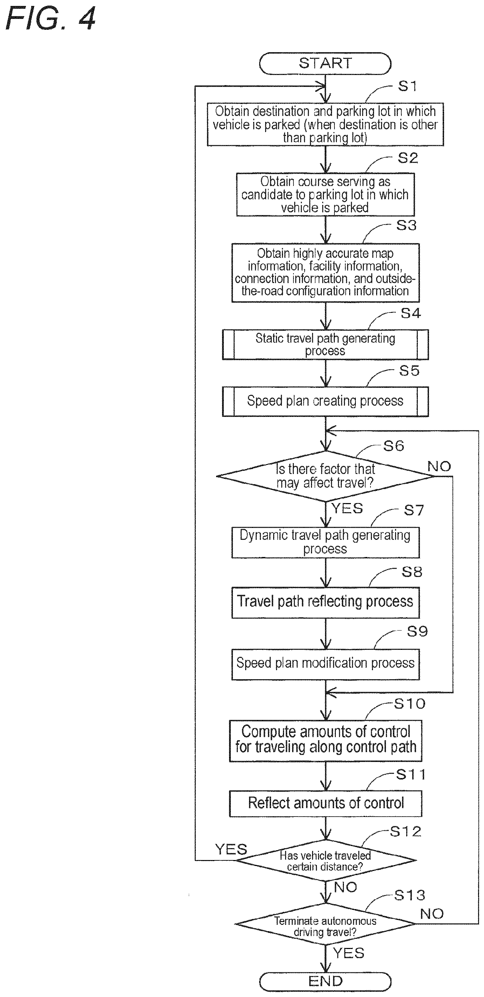

Meanwhile, the navigation ECU (electronic control unit) 33 is an electronic control unit that performs overall control of the navigation device 1, and includes a CPU 51 serving as a computing device and a control device; and internal storage devices such as a RAM 52 that is used as a working memory when the CPU 51 performs various types of arithmetic processing and that stores course data obtained when a course is searched, etc., a ROM 53 having recorded therein a program for control, an autonomous driving assistance program (see FIG. 4) which will be described later, etc., and a flash memory 54 that stores a program read from the ROM 53. Note that the navigation ECU 33 includes various types of means serving as processing algorithms. For example, parking lot obtaining means obtains a parking lot in which the vehicle is parked at a destination. Travel path generating means generates a travel path recommended for the vehicle to travel along when moving from a travel start point to an entrance to a parking lot, using at least road information including information about lanes, facility information including information about the entrance to the parking lot, and connection information indicating a connection relationship between lanes included in an entry road facing the entrance to the parking lot and the entrance to the parking lot. Driving assistance means provides driving assistance for the vehicle based on the travel path.

The operating part 34 is operated, for example, upon inputting a point of departure which is a travel start point and a destination which is a travel end point, and includes a plurality of operating switches such as various types of keys and buttons (not shown). Based on a switch signal outputted by, for example, depression of a given switch, the navigation ECU 33 performs control to perform a corresponding one of various types of operation. Note that the operating part 34 may include a touch panel provided on the front of the liquid crystal display 35. Note also that the operating part 34 may include a microphone and a voice recognition device.

In addition, on the liquid crystal display 35 there are displayed a map image including roads, traffic information, operation guidance, an operation menu, guidance on keys, guidance information in accordance with a guidance course (planned travel course), news, weather forecasts, time, e-mails, TV programs, etc. Note that instead of the liquid crystal display 35, a HUD or an HMD may be used.

In addition, the speaker 36 outputs voice guidance that provides guidance on travel along a guidance course (planned travel course) or guidance on traffic information, based on an instruction from the navigation ECU 33.

In addition, the DVD drive 37 is a drive that can read data recorded on a recording medium such as a DVD or a CD. Based on the read data, for example, music or video is played back or the map information DB 45 is updated. Note that instead of the DVD drive 37, a card slot for performing reading and writing on a memory card may be provided.

In addition, the communication module 38 is a communication device for receiving traffic information, probe information, weather information, etc., that are transmitted from traffic information centers, e.g., a VICS center and a probe center, etc., and corresponds, for example, to a mobile phone or a DCM. In addition, the communication module 38 also includes a vehicle-to-vehicle communication device that performs communication between vehicles and a road-to-vehicle communication device that performs communication with a road-side device. In addition, the communication module 38 is also used to transmit and receive course information searched by the server device 4, highly accurate map information 16, facility information 17, connection information 18, and outside-the-road configuration information 19 to/from the server device 4.

In addition, the exterior camera 39 is composed of, for example, a camera using a solid-state imaging device such as a CCD, and is attached to the upper side of a front bumper of the vehicle and is placed such that an optical-axis direction is downward at a predetermined angle relative to the horizontal. When the vehicle travels on an autonomous driving section, the exterior camera 39 captures an image of an area ahead of the vehicle in a traveling direction. In addition, the navigation ECU 33 detects section lines painted on a road on which the vehicle travels, and obstacles such as other vehicles around the vehicle by performing image processing on the captured image having been captured, and generates various types of assistance information about autonomous driving assistance, based on results of the detection. For example, when an obstacle is detected, a new travel path along which the vehicle travels avoiding or following the obstacle is generated. Note that the exterior camera 39 may be configured to be disposed on the rear or side of the vehicle other than the front. Note also that for means for detecting obstacles, a sensor such as millimeter-wave radar or a laser sensor, vehicle-to-vehicle communication, or road-to-vehicle communication may be used instead of a camera.

In addition, the vehicle control ECU 40 is an electronic control unit that controls the vehicle having the navigation device 1 mounted thereon. In addition, driving parts of the vehicle such as steering, a brake, and an accelerator are connected to the vehicle control ECU 40, and in the present embodiment, particularly, after the vehicle starts autonomous driving assistance, each driving part is controlled, by which autonomous driving assistance for the vehicle is provided. In addition, when an override is performed by the user during autonomous driving assistance, the fact that the override is performed is detected.

Here, the navigation ECU 33 transmits various types of assistance information about autonomous driving assistance generated by the navigation device 1 to the vehicle control ECU 40 through the CAN after starting traveling. Then, the vehicle control ECU 40 provides autonomous driving assistance after starting traveling, using the received various types of assistance information. The assistance information includes, for example, a travel path recommended for the vehicle to travel along and a speed plan indicating vehicle speed used upon traveling.

Next, an autonomous driving assistance program executed by the CPU 51 of the navigation device 1 according to the present embodiment that has the above-described configuration will be described based on FIG. 4. FIG. 4 is a flowchart of an autonomous driving assistance program according to the present embodiment. Here, the autonomous driving assistance program is a program that is executed after the ACC power supply (accessory power supply) of the vehicle is turned on and when travel of the vehicle by autonomous driving assistance has started, and that performs assistance travel by autonomous driving assistance in accordance with assistance information generated by the navigation device 1. In addition, the program shown in flowcharts of the following FIGS. 4, 7, and 21 is stored in the RAM 52 or the ROM 53 included in the navigation device 1, and is executed by the CPU 51.

First, in the autonomous driving assistance program, at step (hereinafter, abbreviated as S) 1, the CPU 51 obtains a destination of the vehicle. Basically, the destination is set by a user's operation accepted by the navigation device 1. Note that the destination may be a parking lot or may be a point other than a parking lot. Note, however, that when the destination is a point other than a parking lot, a parking lot in which the user parks the vehicle at the destination is also obtained. When the destination has a dedicated parking lot or an associated parking lot, the parking lot is a parking lot in which the user parks the vehicle. On the other hand, when there is no dedicated parking lot or associated parking lot, a parking lot around the destination is a parking lot in which the user parks the vehicle. Note that when there are a plurality of candidate parking lots, a navigation device 1 side may select a parking lot in which the user parks the vehicle or the user may select a parking lot.

Then, at S2, the CPU 51 obtains a course serving as a candidate for the vehicle to reach the parking lot in which the user parks the vehicle from a current location of the vehicle (hereinafter, referred to as candidate course). It is desirable to obtain a plurality of candidate courses. Particularly, it is desirable to include candidate courses having different traveling directions upon reaching the parking lot. In addition, for a large parking lot with a plurality of entrances to the parking lot, it is desirable to obtain a plurality of candidate courses that reach the respective entrances.

In addition, in the present embodiment, the above-described candidate course is searched by, particularly, the server device 4. When a candidate course is searched, first, the CPU 51 transmits a course search request to the server device 4. Note that the course search request includes a terminal ID that identifies the navigation device 1 which is a sender of the course search request; and information that identifies a point of departure (e.g., a current location of the vehicle) and a parking lot in which the user parks the vehicle (when an entrance to the parking lot can be identified, the entrance to the parking lot). Thereafter, the CPU 51 receives searched-course information transmitted from the server device 4 in response to the course search request. The searched-course information is information that identifies a candidate course for the vehicle to reach the parking lot in which the user parks the vehicle from the point of departure (e.g., a series of links included in the candidate course), the candidate course being searched by the server device 4 using the latest version of map information and based on the transmitted course search request. The search is performed using, for example, the publicly known Dijkstra's algorithm. Note, however, that a candidate course may be searched by the navigation device 1 instead of the server device 4.

Then, at S3, the CPU 51 obtains highly accurate map information 16, targeting an area including the candidate course obtained at the above-described S2.

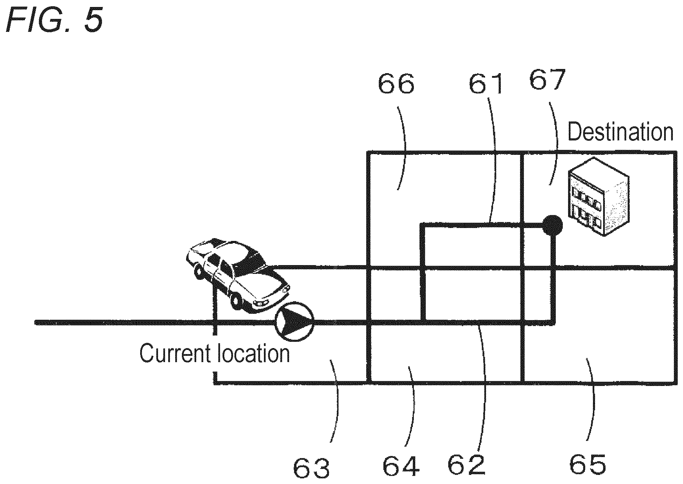

Here, the highly accurate map information 16 is stored in the highly accurate map DB 13 of the server device 4 so as to be sectioned in rectangular shapes (e.g., 500 m × 1 km) as shown in FIG. 5. Thus, for example, when there are a course 61 and a course 62 as candidate courses as shown in Fig. 5, highly accurate map information 16 are obtained targeting areas 63 to 67 including the course 61 and the course 62. Note, however, that when a distance to a parking lot in which the user parks the vehicle is particularly far, for example, highly accurate map information 16 may be obtained targeting only a secondary mesh in which the vehicle is currently located, or highly accurate map information 16 may be obtained targeting only an area within a predetermined distance (e.g., within 3 km) from a current location of the vehicle.

The highly accurate map information 16 includes, for example, information about the lane configurations of roads and section lines (roadway centerlines, lane boundary lines, roadway outer lines, guidelines, etc.) painted on the roads. In addition to the information, there are also included, for example, information about intersections and information about parking lots. The highly accurate map information 16 is basically obtained in units of area in the above-described rectangular shape from the server device 4, but when there is highly accurate map information 16 for areas that is already stored in the cache 46, the highly accurate map information 16 is obtained from the cache 46. In addition, the highly accurate map information 16 obtained from the server device 4 is temporarily stored in the cache 46.

In addition, at the above-described S3, the CPU 51 also obtains facility information 17, targeting the destination and the parking lot in which the user parks the vehicle. Furthermore, there are also likewise obtained connection information 18 indicating a connection relationship between lanes included in an entry road facing an entrance to the parking lot in which the user parks the vehicle and the entrance to the parking lot, and outside-the-road configuration information 19 that identifies a region, through which the vehicle can pass, between the entry road and the entrance to the parking lot in which the user parks the vehicle.

The facility information 17 includes, for example, information that identifies the locations of an entrance and an exit of the parking lot, information that identifies a layout of parking spaces in the parking lot, information about section lines that mark off the parking spaces, and information about passages through which the vehicle and a pedestrian can pass. For a facility other than parking lots, there is included information that identifies the entrance and exit of the facility and passages in the facility through which the user (pedestrian) can pass. The facility information 17 may be particularly information generated by 3D modeling of the parking lot or facility. In addition, the facility information 17, the connection information 18, and the outside-the-road configuration information 19 are basically obtained from the server device 4, but when corresponding information is already stored in the cache 46, the information is obtained from the cache 46. In addition, the facility information 17, connection information 18, and outside-the-road configuration information 19 obtained from the server device 4 are temporarily stored in the cache 46.

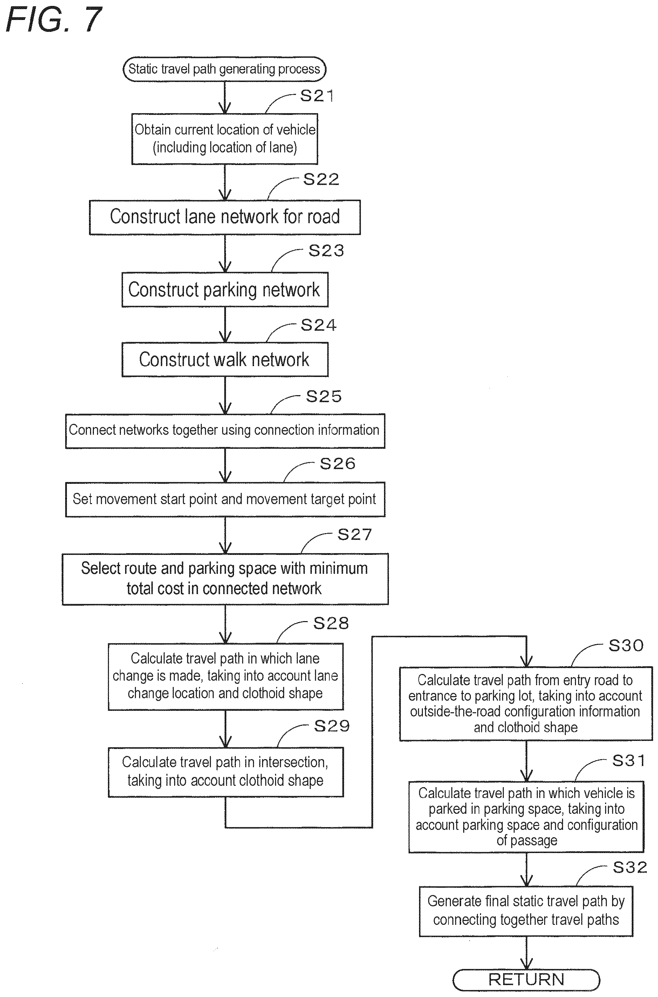

Thereafter, at S4, the CPU 51 performs a static travel path generating process (FIG. 7) which will be described later. Here, the static travel path generating process is a process of generating a static travel path which is a travel path recommended for the vehicle to travel along, based on the current location of the vehicle, the parking lot in which the user parks the vehicle, and the highly accurate map information 16, facility information 17, connection information 18, and outside-the-road configuration information 19 obtained at the above-described S2. Note that the static travel path includes, as will be described later, a first travel path recommended for the vehicle to travel along in lanes from a travel start point to the entry road facing the entrance to the parking lot, a second travel path recommended for the vehicle to travel along from the entry road to the entrance to the parking lot, and a third travel path recommended for the vehicle to travel along from the entrance to the parking lot to a parking space in which the vehicle is parked. Note, however, that when a distance to the parking lot in which the user parks the vehicle is particularly far, only a first travel path may be generated targeting a section from a current location of the vehicle to a location a predetermined distance ahead in a traveling direction (e.g., within a secondary mesh in which the vehicle is currently located). Note that the predetermined distance can be changed as appropriate, but a static travel path is generated targeting a region including at least outside an area (detection area) for which road conditions around the vehicle can be detected using the exterior camera 39 and other sensors.

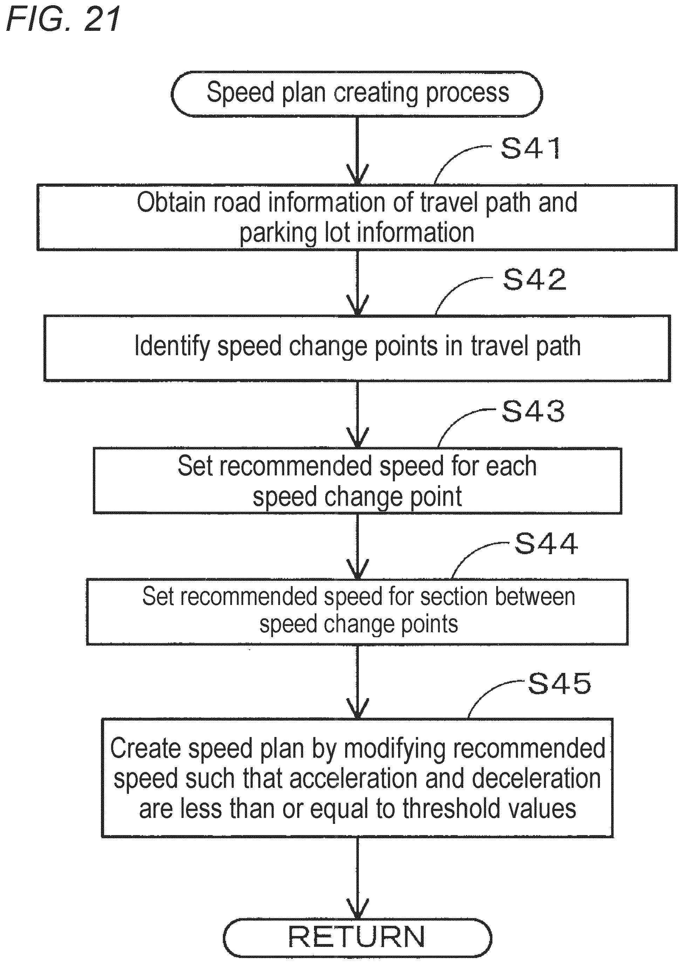

Then, at S5, the CPU 51 performs a speed plan creating process (FIG. 21) which will be described later. In the speed plan creating process, a speed plan for the vehicle that is used upon traveling along the static travel path generated at the above-described S4 is created based on the highly accurate map information 16, facility information 17, connection information 18, and outside-the-road configuration information 19 obtained at the above-described S3. For example, a travel speed of the vehicle recommended upon traveling along the static travel path is calculated taking into account speed limit information and speed change points (e.g., the entrance to the parking lot, intersections, curves, railroad crossings, or crosswalks) present in the static travel path.

Then, the static travel path generated at the above-described S4 and the speed plan created at the above-described S5 are stored in the flash memory 54, etc., as assistance information used for autonomous driving assistance. In addition, an acceleration plan indicating acceleration and deceleration of the vehicle required to implement the speed plan created at the above-described S5 may also be created as assistance information used for autonomous driving assistance.

Subsequently, at S6, the CPU 51 determines, as surrounding road conditions, particularly whether a factor that affects travel of the vehicle is present around the vehicle, by performing image processing on a captured image having been captured with the exterior camera 39. Here, the "factor that affects travel of the vehicle" to be determined at the above-described S6 is a dynamic factor that changes in real time, and static factors based on road structures are excluded. For example, the factor that affects travel of the vehicle corresponds to another vehicle that travels or is parked ahead of the vehicle in a traveling direction, a pedestrian located ahead of the vehicle in the traveling direction, a construction section present ahead of the vehicle in the traveling direction, etc. On the other hand, intersections, curves, railroad crossings, merge sections, lane reduction sections, etc., are excluded. In addition, even when there is another vehicle, a pedestrian, or a construction section, if there is no possibility of them overlapping a future travel path of the vehicle (e.g., if they are located away from the future travel path of the vehicle), then they are excluded from the "factor that affects travel of the vehicle". In addition, for means for detecting a factor that may affect travel of the vehicle, a sensor such as millimeter-wave radar or a laser sensor, vehicle-to-vehicle communication, or road-to-vehicle communication may be used instead of a camera.

Then, if it is determined that a factor that affects travel of the vehicle is present around the vehicle (S6: YES), then processing transitions to S7. On the other hand, if it is determined that a factor that affects travel of the vehicle is not present around the vehicle (S6: NO), then processing transitions to S10.

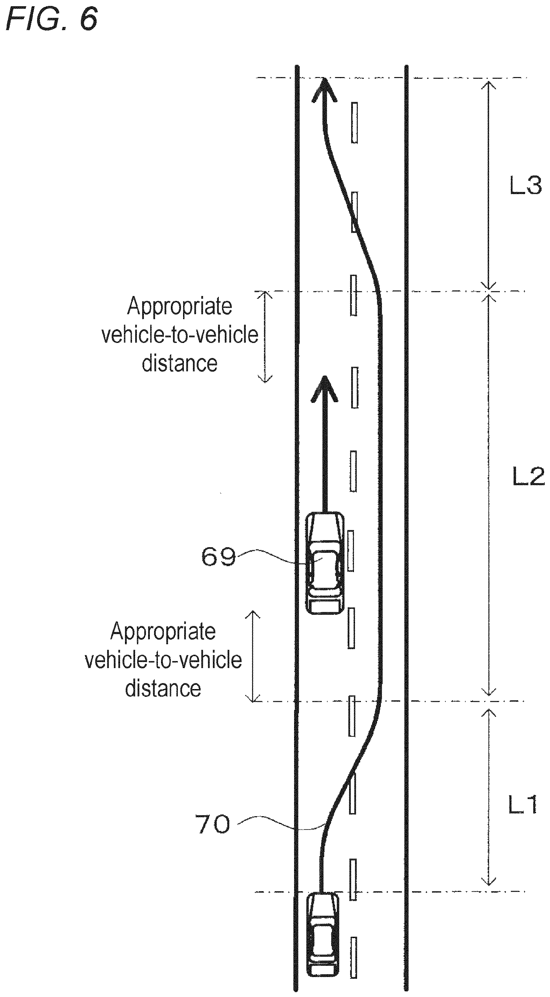

At S7, the CPU 51 generates, as a dynamic travel path, a new path for avoiding or following the "factor that affects travel of the vehicle" detected at the above-described S6 from a current location of the vehicle and returning to the static travel path. Note that the dynamic travel path is generated targeting a section including the "factor that affects travel of the vehicle". Note also that the length of the section varies depending on what the factor is. For example, when the "factor that affects travel of the vehicle" is another vehicle traveling ahead of the vehicle (vehicle ahead), as shown in FIG. 6, an avoidance path which is a path in which the vehicle makes a lane change to the right to pass a vehicle ahead 69 and then makes a lane change to the left to return to an original lane is generated as a dynamic travel path 70. Note that a following path which is a path in which the vehicle travels following the vehicle ahead 69 from behind at a predetermined distance without passing the vehicle ahead 69 (or travels side by side with the vehicle ahead 69) may be generated as a dynamic travel path.

A method of calculating the dynamic travel path 70 shown in FIG. 6 will be described as an example. The CPU 51 first calculates a first path L1 required for the vehicle to move into a right lane by starting a turn of the steering and for the steering position to return to a straight-ahead direction. Note that the first path L1 is calculated using a clothoid curve so as to be as smooth as possible and to have the shortest possible distance required for a lane change, on conditions that lateral acceleration (lateral G) occurring upon making a lane change does not interfere with autonomous driving assistance and does not exceed an upper limit value (e.g., 0.2 G) at which a passenger of the vehicle is not given discomfort, the lateral G being calculated based on the current vehicle speed of the vehicle. In addition, maintaining an appropriate vehicle-to-vehicle distance D or more with the vehicle ahead 69 is also a condition.

Then, a second path L2 is calculated in which the vehicle travels in the right lane with a speed limit being an upper limit, to pass the vehicle ahead 69 and travels until an appropriate vehicle-to-vehicle distance D or more with the vehicle ahead 69 is obtained. Note that the second path L2 is basically a straight path, and the length of the path is calculated based on the vehicle speed of the vehicle ahead 69 and the speed limit for the road.

Subsequently, a third path L3 is calculated that is required for the vehicle to return to the left lane by starting a turn of the steering and for the steering position to return to the straight-ahead direction. Note that the third path L3 is calculated using a clothoid curve so as to be as smooth as possible and to have the shortest possible distance required for a lane change, on conditions that lateral acceleration (lateral G) occurring upon making a lane change does not interfere with autonomous driving assistance and does not exceed an upper limit value (e.g., 0.2 G) at which a passenger of the vehicle is not given discomfort, the lateral G being calculated based on the current vehicle speed of the vehicle. In addition, maintaining an appropriate vehicle-to-vehicle distance D or more with the vehicle ahead 69 is also a condition.

Note that a dynamic travel path is generated based on road conditions around the vehicle that are obtained using the exterior camera 39 and other sensors, and thus, a region for which a dynamic travel path is to be generated is at least within an area (detection area) for which road conditions around the vehicle can be detected using the exterior camera 39 and other sensors.

Subsequently, at S8, the CPU 51 reflects the dynamic travel path that is newly generated at the above-described S7 in the static travel path generated at the above-described S4. Specifically, a cost for each of the static travel path and the dynamic travel path is calculated for an area from the current location of the vehicle to the end of a section including the "factor that affects travel of the vehicle", and a travel path with a minimum cost is selected. Consequently, a part of the static travel path is replaced by the dynamic travel path as necessary. Note that depending on the situation, the dynamic travel path may not be replaced, i.e., even when the dynamic travel path is reflected, there may be no change in the static travel path generated at the above-described S4. Furthermore, when the dynamic travel path and the static travel path are identical paths, even when replacement is performed, there may be no change in the static travel path generated at the above-described S4.

Then, at S9, the CPU 51 modifies, for a portion of the static travel path in which the dynamic travel path has been reflected at the above-described S8, the speed plan for the vehicle created at the above-described S5, based on a change in the reflected dynamic travel path. Note that when there is no change in the static travel path generated at the above-described S4 as a result of reflecting the dynamic travel path, the process at S9 may be omitted.

Subsequently, at S10, the CPU 51 computes the amounts of control for the vehicle to travel along the static travel path generated at the above-described S4 (when the dynamic travel path is reflected at the above-described S8, a path obtained after the reflection) at a speed in accordance with the speed plan created at the above-described S5 (when the speed plan is modified at the above-described S9, a plan obtained after the modification). Specifically, each of the amounts of control for an accelerator, a brake, a gear, and steering is computed. Note that the processes at S10 and S11 may be performed by the vehicle control ECU 40 that controls the vehicle, instead of the navigation device 1.

Thereafter, at S11, the CPU 51 reflects the amounts of control computed at S10. Specifically, the computed amounts of control are transmitted to the vehicle control ECU 40 through the CAN. The vehicle control ECU 40 performs vehicle control on each of the accelerator, brake, gear, and steering based on the received amounts of control. As a result, it becomes possible to perform travel assistance control for traveling along the static travel path generated at the above-described S4 (when the dynamic travel path is reflected at the above-described S8, a path obtained after the reflection) at a speed in accordance with the speed plan created at the above-described S5 (when the speed plan is modified at the above-described S9, a plan obtained after the modification).

Then, at S12, the CPU 51 determines whether the vehicle has traveled a certain distance since the generation of a static travel path at the above-described S4. For example, the certain distance is 1 km.

Then, if it is determined that the vehicle has traveled a certain distance since the generation of a static travel path at the above-described S4 (S12: YES), then processing returns to S1. Thereafter, generation of a static travel path and creation of a speed plan based on a current location of the vehicle at the present time are performed again (S1 to S5). Note that, in the present embodiment, every time the vehicle has traveled a certain distance (e.g., 1 km), generation of a static travel path and creation of a speed plan based on a current location of the vehicle are repeatedly performed, but generation of a static travel path and creation of a speed plan may be performed only once at the time of starting traveling.

On the other hand, if it is determined that the vehicle has not traveled a certain distance since the generation of a static travel path at the above-described S4 (S12: NO), then it is determined whether to terminate the assistance travel by autonomous driving assistance (S13). A case of terminating the assistance travel by autonomous driving assistance includes a case in which the travel by autonomous driving assistance is intentionally canceled (override) by the user operating an operation panel provided on the vehicle or performing a steering wheel operation, a brake operation, etc., in addition to a case in which parking in the parking lot is completed.

Then, if it is determined to terminate the assistance travel by autonomous driving assistance (S13: YES), then the autonomous driving assistance program is terminated. On the other hand, if it is determined to continue the assistance travel by autonomous driving assistance (S13: NO), then processing returns to S6.

Next, a subprocess of the static travel path generating process performed at the above-described S4 will be described based on FIG. 7. FIG. 7 is a flowchart of a subprocess program of the static travel path generating process.

First, at S21, the CPU 51 obtains a current location of the vehicle detected by the current location detecting part 31. Note that it is desirable to specifically identify the current location of the vehicle using, for example, highly accurate GPS information or a highly accurate location technique. Here, the highly accurate location technique is a technique for enabling detection of a travel lane and a highly accurate vehicle location by detecting, by image recognition, white lines and road surface painting information captured with a camera installed on the vehicle, and further checking the detected white lines and road surface painting information against, for example, the highly accurate map information 16. Furthermore, when the vehicle travels on a road having a plurality of lanes, a lane in which the vehicle travels is also identified.

Then, at S22, the CPU 51 constructs a lane network, targeting the candidate course (obtained at S2) which is a candidate for the vehicle to travel to the parking lot in which the user parks the vehicle, based on the highly accurate map information 16 obtained at the above-described S3. The highly accurate map information 16 includes lane configurations, section line information, and information about intersections, and furthermore, the lane configurations and the section line information include, for example, information that identifies the number of lanes, how and at which location the number of lanes increases or decreases when there is an increase or decrease in the number of lanes, a passage segment in a traveling direction for each lane and a connection between roads for each lane (specifically, a correspondence between lanes included in a road before passing through an intersection and lanes included in a road after passing through the intersection), and guidelines (white guidelines) in intersections. The lane network generated at the above-described S22 is a network representing movement into lanes that can be selected by the vehicle when the vehicle travels along the candidate course. When there are a plurality of candidate courses obtained at the above-described S2, the above-described construction of a lane network is performed for the plurality of candidate courses. In addition, a lane network is constructed targeting a section from the current location of the vehicle (travel start point) to the entry road facing the entrance to the parking lot in which the user parks the vehicle.

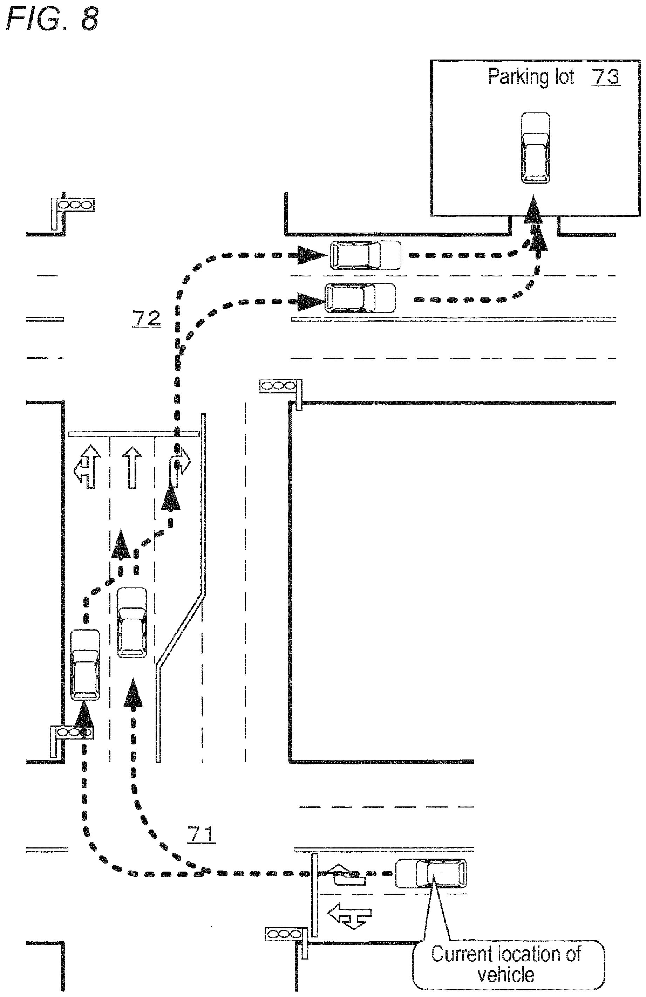

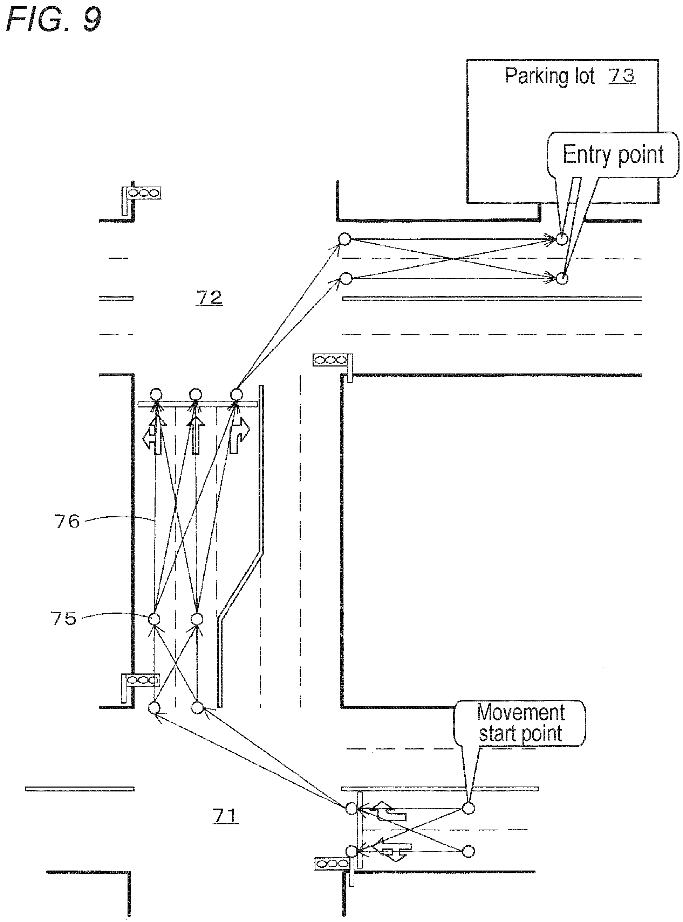

Here, as an example of constructing a lane network at the above-described S22, for example, an example case in which the vehicle travels along candidate courses shown in FIG. 8 will be described. In the example shown in FIG. 8, the candidate courses each are a course in which the vehicle travels straight ahead from its current location, and then turns right at a next intersection 71 and further turns right at a next intersection 72, too, and makes a left turn to enter a parking lot 73 that is where to park the vehicle. In the candidate courses shown in FIG. 8, for example, when the vehicle turns right at the intersection 71, the vehicle can enter a right lane or can also enter a left lane. Note, however, that since the vehicle needs to turn right at the next intersection 72, the vehicle needs to move into the far right lane at the time of entering the intersection 72. In addition, when the vehicle turns right at the intersection 72, too, the vehicle can enter a right lane or can also enter a left lane. Lane networks constructed targeting the candidate courses that allow such movement into lanes are shown in FIG. 9.

As shown in FIG. 9, the lane networks each divide a corresponding candidate course for which a static travel path is to be generated, into a plurality of segments (groups). Specifically, the candidate course is divided such that a location where the vehicle enters an intersection, a location where the vehicle exits the intersection, and a location where the number of lanes increases or decreases serve as boundaries. A node point (hereinafter, referred to as lane node) 75 is set at a point in each lane located at a boundary of each divided segment. Furthermore, a link (hereinafter, referred to as lane link) 76 that connects lane nodes 75 is set. Note that a start location (i.e., a start node) of a lane network is a current location of the vehicle (travel start point), and an end location (i.e., an end node) of the lane network is particularly a point (hereinafter, referred to as entry point) on an entry road, which faces an entrance to a parking lot in which the user parks the vehicle and at which the vehicle starts entering the parking lot, the entry road facing the entrance to the parking lot.

In addition, the above-described lane networks each include particularly information that identifies, by a connection between lane nodes and a lane link at an intersection, a correspondence between a lane included in a road before passing through the intersection and a lane included in a road after passing through the intersection, i.e., a lane into which the vehicle can move after passing through the intersection from a lane taken before passing through the intersection. Specifically, a lane network indicates that the vehicle can move between lanes corresponding to lane nodes that are connected by a lane link among lane nodes set on a road before passing through an intersection and lane nodes set on a road after passing through the intersection.

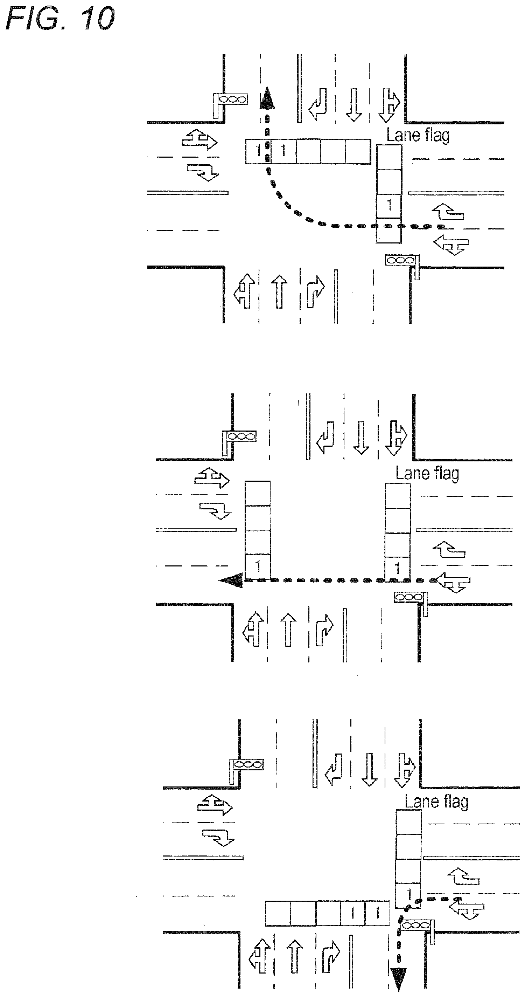

To generate such a lane network, the highly accurate map information 16 stores, for each road connected to an intersection, lane flags indicating a correspondence between lanes and set for each combination of a road that enters the intersection and a road that exits the intersection. For example, FIG. 10 shows lane flags for entering an intersection from a road on the right side and exiting to a road on the upper side, lane flags for entering an intersection from a road on the right side and exiting to a road on the left side, and lane flags for entering an intersection from a road on the right side and exiting to a road on the lower side. The lane flags indicate that a lane whose lane flag is set to "1" among lanes included in a road before passing through an intersection is associated with a lane whose lane flag is set to "1" among lanes included in a road after passing through the intersection, i.e., the lanes whose lane flags are set to "1" are lanes between which the vehicle can move before and after passing through the intersection. When the CPU 51 constructs a lane network at the above-described S22, the CPU 51 forms a connection between lane nodes and a lane link at an intersection by referring to the lane flags.

Note that when there are a plurality of candidate courses obtained at the above-described S2, a lane network shown in FIG. 9 is constructed likewise for each of the plurality of candidate courses.

Subsequently, at S23, the CPU 51 constructs, based on the facility information 17 obtained at the above-described S3, a parking network, targeting the parking lot in which the user parks the vehicle. The facility information 17 includes information that identifies the location of an entrance to the parking lot, information that identifies a layout of parking spaces in the parking lot, information about section lines that mark off the parking spaces, and passages through which the vehicle and a pedestrian can pass. The parking network generated at the above-described S23 is a network representing a course that can be selected by the vehicle when the vehicle travels in the parking lot.

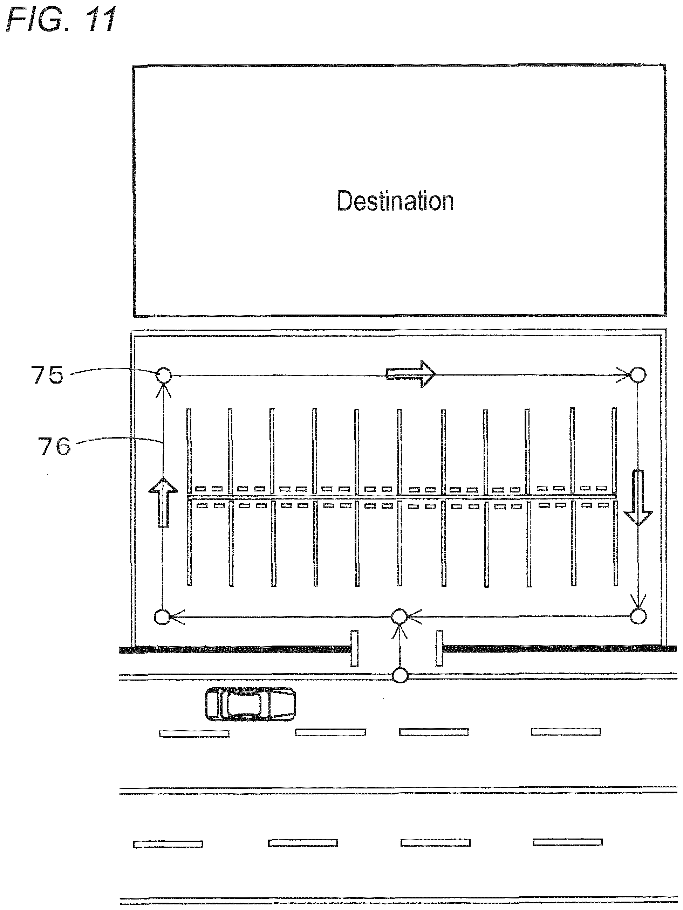

Here, an example of constructing a parking network at the above-described S23 is shown in FIG. 11. As shown in FIG. 11, as with the above-described lane network, the parking network is constructed using lane nodes 75 and lane links 76. Note that the lane nodes 75 are set for each of the entrance and exit of a parking lot, an intersection at which passages through which the vehicle can pass intersect each other, and corners of a passage through which the vehicle can pass. On the other hand, the lane links 76 each are set for a portion of a passage between lane nodes 75 through which the vehicle can pass. In addition, the lane links 76 each also have information that identifies a direction in which the vehicle can pass through a passage in the parking lot. For example, FIG. 11 shows an example in which the vehicle can pass through a passage in the parking lot only in a clockwise direction.

Note that although in the example shown in FIG. 11, lane nodes 75 are set at corners of a passage through which the vehicle can pass, instead of setting lane nodes 75 at the corners, a lane node 75 may be set only at a point at which there are a plurality of vehicle traveling directions like an intersection of passages. Note also that the lane nodes 75 and the lane links 76 may be set on the same conditions as those for the lane network shown in FIG. 9. For example, even in a parking lot, when a passage has a plurality of lanes, lane links 76 may be set for the respective lanes, and an attribute regarding the parking lot may be added to links, etc.

Then, at S24, the CPU 51 constructs, based on the facility information 17 obtained at the above-described S3, a walk network, targeting a section in which the user moves on foot from the parking lot in which the user parks the vehicle to the destination. In addition to the above-described information about the parking lot, the facility information 17 includes, for a facility other than the parking lot, information that identifies the entrance and exit of the facility and a passage in the facility through which the user (pedestrian) can pass. The walk network generated at the above-described S24 is a network representing a course along which the user can move on foot from the parking lot to the destination. Note that when the destination is a parking lot, a walk network is not constructed.

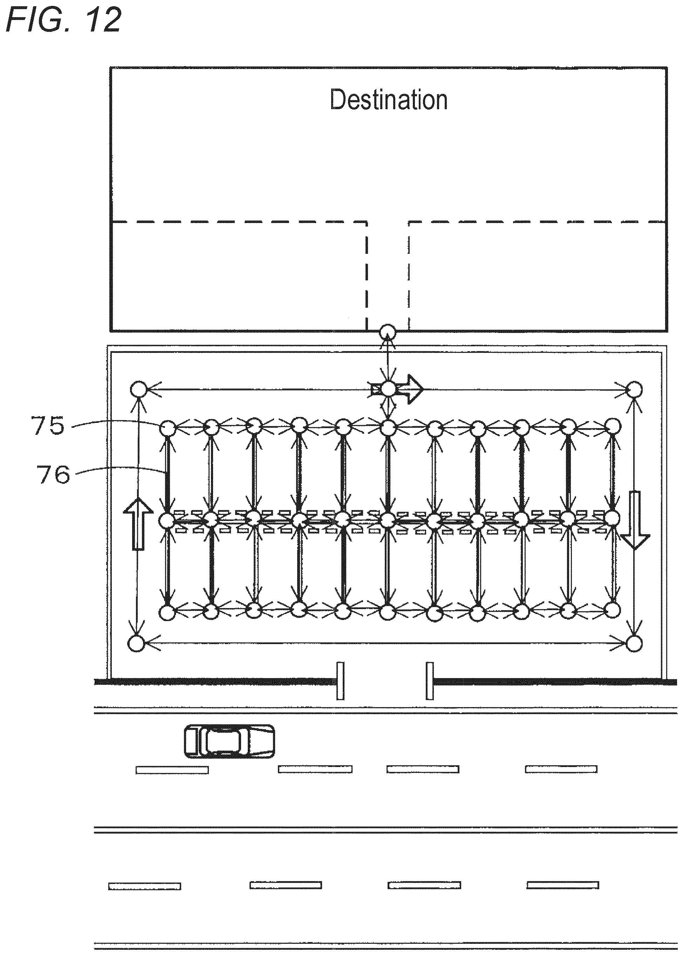

Here, an example of constructing a walk network at the above-described S24 is shown in FIG. 12. As shown in FIG. 12, as with the above-described lane network and parking network, the parking network is constructed using lane nodes 75 and lane links 76. Note that the lane nodes 75 are set for each of an intersection at which passages through which the pedestrian can pass (including passages through which the vehicle can pass, in addition to passages dedicated for pedestrians; the same applies hereinafter) intersect each other, corners of a passage through which the pedestrian can pass, end points of section lines that mark off parking spaces, and the entrance and exit of a facility which is the destination. On the other hand, the lane links 76 each are set for a portion of a passage between lane nodes 75 through which the pedestrian can pass. Note that the passages through which the pedestrian can pass correspond to passages through which only the pedestrian can pass in addition to passages in which the vehicle can also travel, and boundaries (section lines) between parking spaces. In addition, the lane links 76 each also have information that identifies a direction in which the pedestrian can pass.

In addition, although in the example shown in FIG. 12, the parking lot in which the user parks the vehicle is present in a site of the facility which is the destination, when the facility which is the destination is far away from the parking lot and the user needs to move on foot on a road outside the parking lot after parking the vehicle, a walk network is also constructed likewise for the road.

In addition, when the facility which is the destination is a complex commercial facility including a plurality of tenants and any of the tenants is specified as the destination, a walk network may also be constructed likewise for passages in the facility.

Thereafter, at S25, the CPU 51 connects together the lane network constructed at the above-described S22, the parking network constructed at the above-described S23, and the walk network constructed at the above-described S24, thereby generating a network including all of movement of the vehicle from the current location of the vehicle to the parking lot, movement of the vehicle in the parking lot, and movement of the user on foot after getting out of the vehicle in the parking lot.

Particularly, a connection between the lane network and the parking network is performed using the connection information 18 obtained at the above-described S3. Here, the connection information 18 indicates a connection relationship between lanes included in an entry road facing an entrance to the parking lot and the entrance to the parking lot and is, more specifically, information that identifies, for each lane included in the entry road, whether the vehicle can enter the entrance to the parking lot from the lane.

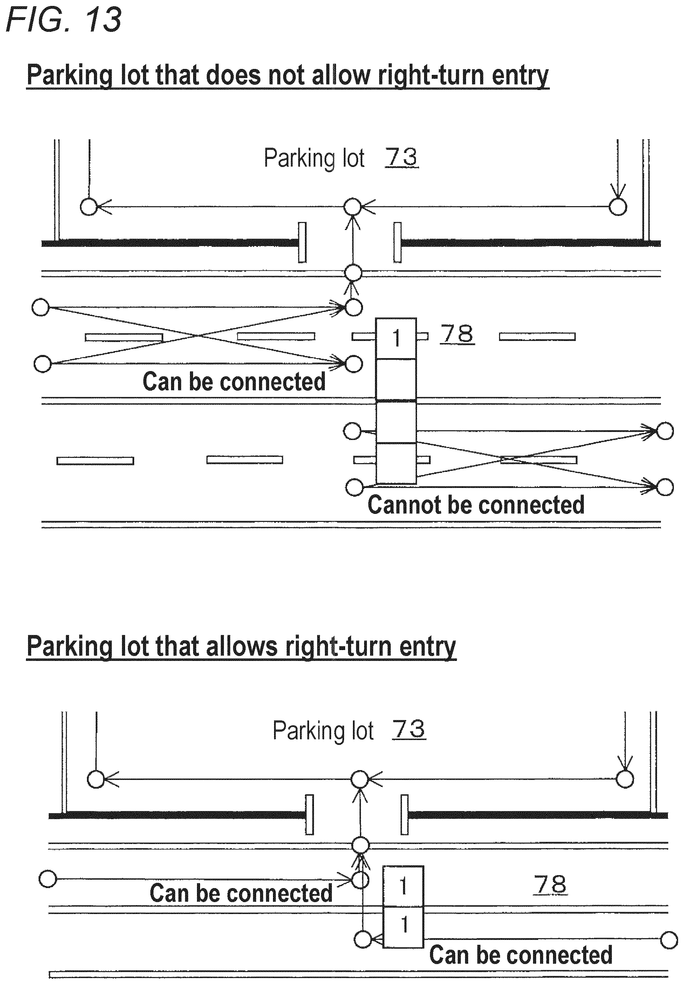

FIG. 13 is a diagram showing an example of the connection information 18. The connection information 18 stores entry flags indicating whether the vehicle can enter an entrance to a parking lot and set for each lane included in an entry road 78. For example, a diagram at the top of FIG. 13 shows connection information 18 for a parking lot 73 that prohibits right-turn entry or that does not allow right-turn entry due to the presence of a median strip, and an entry road 78 with two lanes in each direction, and the entry flag "1" indicating that the vehicle can enter an entrance to the parking lot is set for a lane located closest to a parking lot 73 side among the four lanes included in the entry road 78. On the other hand, a diagram at the bottom of FIG. 13 shows connection information 18 for a parking lot 73 that allows right-turn entry and an entry road 78 with one lane in each direction, and the entry flag "1" indicating that the vehicle can enter an entrance to the parking lot is set for both of the two lanes included in the entry road 78.

As a result, for example, when a lane network and a parking network are connected together based on the connection information 18 shown in the diagram at the top of FIG. 13, a lane network for a candidate course that reaches the parking lot 73 from the left side of the diagram can be connected to the parking network, but a lane network for a candidate course that reaches the parking lot 73 from the right side of the diagram cannot be connected to the parking network. Note that the candidate course that cannot be connected to the parking network is excluded hereafter from a processing target. On the other hand, when a lane network and a parking network are connected together based on the connection information 18 shown in the diagram at the bottom of FIG. 13, both of a lane network for a candidate course that reaches the parking lot 73 from the left side of the diagram and a lane network for a candidate course that reaches the parking lot 73 from the right side of the diagram can be connected to the parking network. When a lane network and a parking network can be connected together, a lane node 75 at an entrance to the parking lot and a lane node 75 at an entry point in a lane that allows entry are newly connected together by a lane link 76.

Meanwhile, for a connection between the parking network and the walk network, with parking spaces provided in the parking lot being boundaries, a parking network close to a parking space and the walk network are connected together.

Then, at S26, the CPU 51 sets each of a movement start point at which the vehicle starts moving and a movement target point which is a target to which the vehicle moves, in the network constructed at the above-described S25. Note that the movement start point is a current location of the vehicle, and the movement target point is, when the destination is a parking lot, a parking space in the parking lot and is, when the destination is not a parking lot, an entrance to a facility which is the destination. In addition, when the facility which is the destination is a complex commercial facility including a plurality of tenants and any of the tenants is specified as the destination, it is also possible to set the location of the tenant in the facility as the movement target point.

Thereafter, at S27, the CPU 51 first derives a plurality of candidate routes each continuously connecting the movement start point to the movement target point, by referring to the network constructed at the above-described S25, compares a total of lane costs between the plurality of candidate routes, and identifies a candidate route with a minimum total as a travel path of the vehicle (a way of moving into lanes) recommended upon movement of the vehicle and as a walk course recommended for movement after parking the vehicle. In addition, at the above-described S27, a parking space in which the vehicle is parked in the parking lot is also selected. Specifically, using parking lot empty space information obtained in advance from an external server, a parking space with a minimum total of lane costs is selected from among empty parking spaces.

Here, the total of lane costs include both costs for movement of the vehicle to the parking space and costs for movement on foot from the parking space. Namely, a parking space is selected taking also into account a burden of movement on foot after parking the vehicle in addition to a burden occurring until the vehicle is parked.

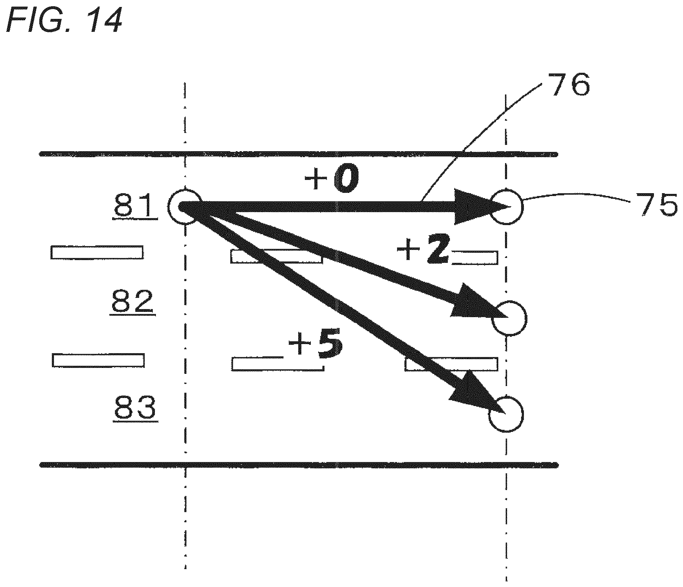

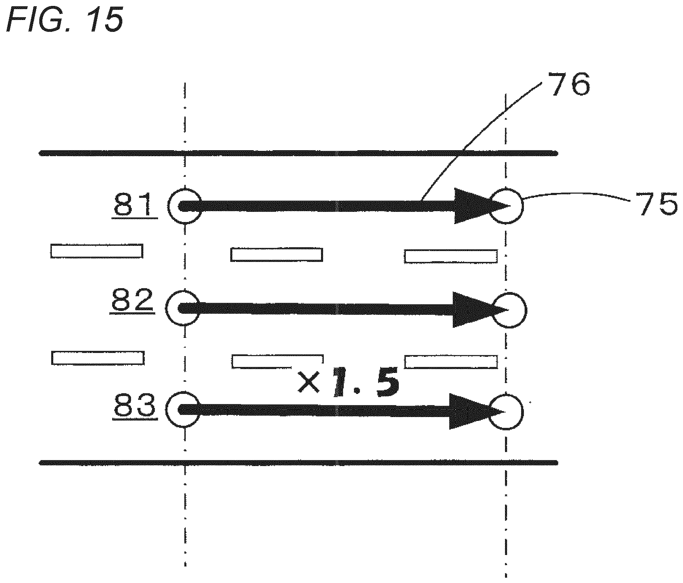

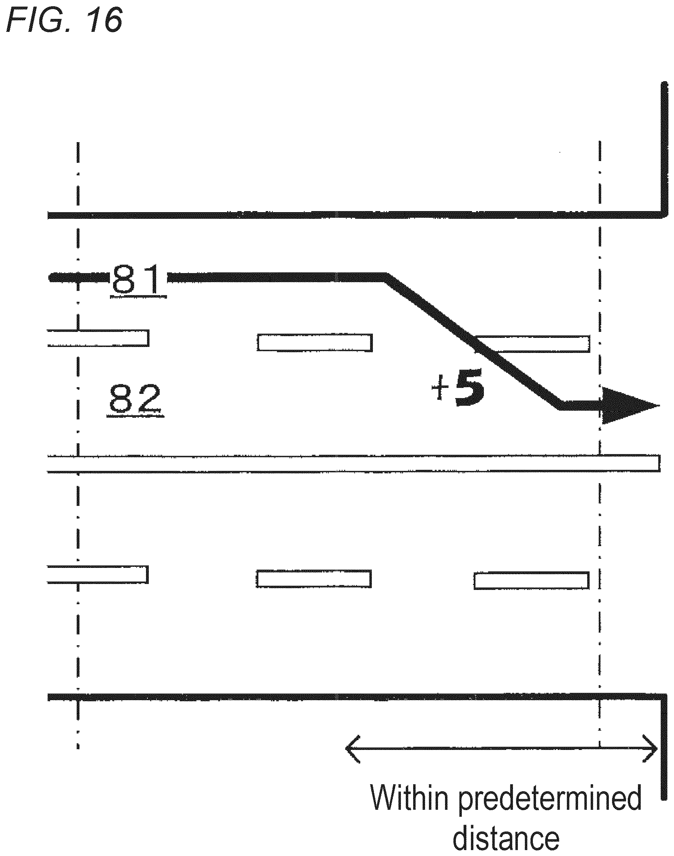

Note that a lane cost is assigned to each lane link 76, and the length of each lane link 76 is used as a reference value. Note also that the reference value is corrected based on movement time (multiplication of moving speed and the length of a link) required to move in each lane link 76. For example, compared to a lane network, a parking network and a walk network are relatively low in moving speed and have long movement time relative to length, and thus, it is desirable that for lane links of the parking network and the walk network, the reference values of lane costs be corrected to larger values. Note that for the moving speed of a lane link 76, for example, in a case of a road, the moving speed is identified by road type, and in a case of "within a parking lot", the moving speed is 10 km/h. In a case of "on foot", the moving speed is 5 km/h. In addition, particularly, for the lane costs of a lane network, the reference value is corrected on the following conditions (1) to (3). In addition, lane links 76 in the same section (group) are basically considered to have the same length. In addition, the length of a lane link 76 in an intersection is considered 0 or a fixed value. Note, however, that if a route that continuously connects a start lane to a target lane can be searched, then search means other than Dijkstra's algorithm may be used.
(1) For a lane cost, a predetermined value based on the number of lane changes required is added to the reference value. Here, as shown in FIG. 14, the predetermined value to be added is a larger value for a lane link 76 with a larger number of lane changes required. For example, a lane link 76 that moves from a lane 81 to a lane 82 requires one lane change and thus "2" is added to the reference value. In addition, a lane link 76 that moves from the lane 81 to a lane 83 requires two consecutive lane changes and thus "5" is added to the reference value. On the other hand, a lane link 76 that maintains the lane 81 does not require a lane change and thus addition is not performed. As a result, a larger total value of lane costs is calculated for a route with a larger number of lane changes, and thus, the route is less likely to be selected as a recommended way of moving into lanes. In addition, for a route in which a plurality of lane changes are made (i.e., lane changes are consecutively made) in the same section, a larger total value of lane costs is calculated over a route in which lane changes are not consecutively made, and thus, the route is less likely to be selected as a recommended way of moving into lanes.
(2) For a lane cost of a lane link in which the vehicle travels in a passing lane without making a lane change (e.g., in left-hand traffic, the far right lane), the reference value is multiplied by a predetermined coefficient. For example, as shown in FIG. 15, for a lane link 76 that travels in a lane 83 which is a passing lane, the reference value is multiplied by "1.5". As a result, a larger total value of lane costs is calculated for a route with a longer distance in which the vehicle travels in the passing lane, and thus, the route is less likely to be selected as a recommended way of moving into lanes.
(3) For a candidate route including a section (group) in which a lane change is made, a plurality of patterns are generated for a candidate for a location at which the lane change is made, and a total of lane costs is calculated for each of the plurality of patterns. Specifically, the location at which a lane change is made is referred to for each pattern and for a pattern corresponding to any one of: (A) a case in which a travel distance of a passing lane before or after making a lane change is longer than a threshold value; (B) a case in which upon making a plurality of lane changes, a time interval between the lane changes is shorter than a threshold value (i.e., lane changes are consecutively made); and (C) a case in which a lane change is made within a predetermined distance before an intersection (e.g., 700 m for a general road and 2 km for an expressway), a predetermined value is further added to the reference value for a lane cost of a lane link in which a lane change is made. For example, as shown in FIG. 16, for a pattern in which the vehicle moves from a lane 81 to a lane 82 between a location a predetermined distance before an intersection and the intersection, "5" is added to the reference value. Then, at the above-described S27, a comparison is made between the total values of lane costs for the respective routes (for a route including a plurality of patterns for movement into lanes, furthermore, for the respective patterns), and a route and a pattern with a minimum total value of lane costs are identified as a way of the vehicle moving into lanes that is recommended upon movement of the vehicle, by which in addition to a section recommended to make a lane change, a location in the section that is recommended to make a lane change is also identified. Note that for a pattern for movement into lanes in which lane changes are consecutively made, a pattern for movement into lanes with a long distance of a passing lane in which the vehicle travels before or after making a lane change, or a pattern for movement into lanes in which a lane change is made between a location a predetermined distance before an intersection and the intersection, a larger total value of lane costs is calculated over a pattern in which such a lane change(s) is not made, and thus, the pattern is less likely to be selected as a recommended way of moving into lanes.

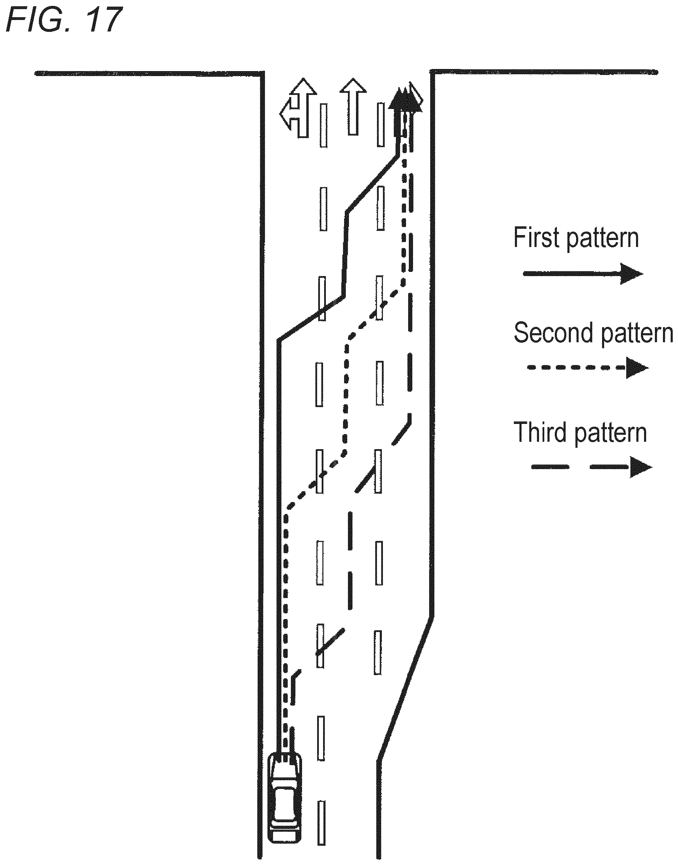

In addition, in the above-described condition (3), the same process is also performed particularly for a case in which a candidate route includes a section (group) in which a plurality of lane changes are made. For example, FIG. 17 describes, as an example, a candidate route including a section (group) in which two lane changes are made from the far left lane. In the example shown in FIG. 17, as candidates for locations at which lane changes are made, there are considered a first pattern in which the vehicle continuously travels in a current travel lane as long as possible and makes two lane changes near an intersection; a second pattern in which the vehicle makes two lane changes at substantially equal distances before the intersection; and a third pattern in which the vehicle makes a lane change at the earliest possible timing. Here, in the first pattern, lane changes are consecutively made at short time intervals and a lane change is made near the intersection, and thus, a high cost is calculated. In addition, in the third pattern, the travel distance of a passing lane on the right is long, and thus, a high cost is calculated likewise. On the other hand, in the second pattern, lane changes are not made at short time intervals, a lane change is not made near the intersection, and the travel distance of the passing lane on the right is relatively short, and thus, a low cost is calculated compared to other patterns. Thus, in the example shown in FIG. 17, as locations at which lane changes are made, the second pattern has the lowest cost and is likely to be selected as a recommended way of the vehicle moving into lanes.

Then, at S28, the CPU 51 calculates a travel path recommended, particularly, for a segment (group) in which a lane change is made in a case in which the vehicle moves in accordance with the route selected at the above-described S27. Note that when the route selected at the above-described S27 is a route with no lane changes, the process at S28 may be omitted.

Specifically, the CPU 51 calculates a travel path using, for example, map information for a location at which a lane change is made and which is identified at the above-described S27. For example, a path that is as smooth as possible and that has the shortest possible distance required for a lane change is calculated using a clothoid curve, on conditions that lateral acceleration (lateral G) occurring when the vehicle makes a lane change does not interfere with autonomous driving assistance and does not exceed an upper limit value (e.g., 0.2 G) at which a passenger of the vehicle is not given discomfort, the lateral G being calculated based on vehicle speed (a speed limit for a corresponding road) and lane width. Note that the clothoid curve is a curve formed by a vehicle's trajectory when the vehicle has a constant travel speed and the steering is turned at a constant angular speed.

Then, at S29, the CPU 51 calculates a travel path recommended, particularly, for a segment (group) in an intersection in a case in which the vehicle moves in accordance with the route selected at the above-described S27. Note that when the route selected at the above-described S27 is a route that does not pass through any intersection, the process at S29 may be omitted.

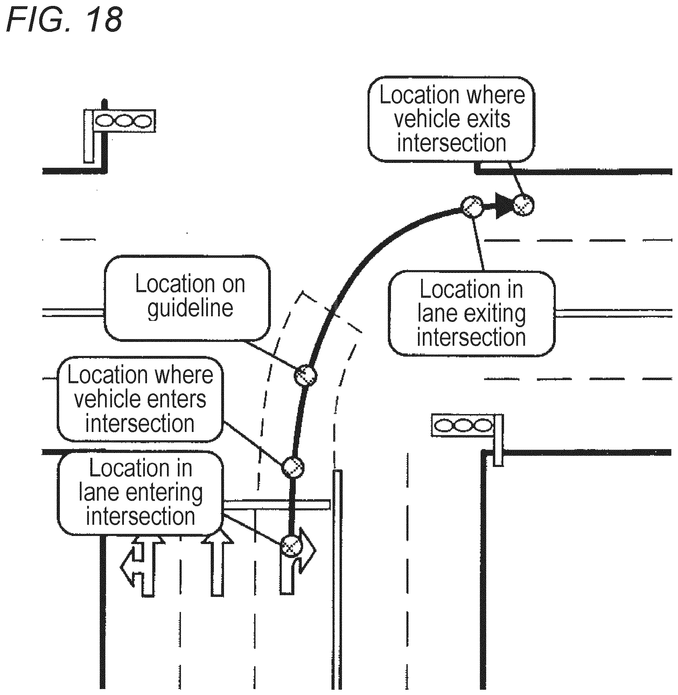

For example, FIG. 18 describes an example case in which a travel path is calculated targeting a segment (group) in an intersection that is set with a route for movement into lanes in which the vehicle enters the intersection from the far right lane and thereafter exits to the far left lane. First, the CPU 51 marks locations in the intersection through which the vehicle is to pass. Specifically, each of a location in a lane entering the intersection, a location at which the vehicle enters the intersection, a location on a guideline in the intersection (only when there is a guideline), a location at which the vehicle exits the intersection, and a lane exiting the intersection is marked. Then, a curve that passes through all of the marked marks is calculated as a travel path. More specifically, the marks are connected by a spline curve and then a clothoid curve that approximates the connected curve is calculated as a travel path. Note that the clothoid curve is a curve formed by a vehicle's trajectory when the vehicle has a constant travel speed and the steering is turned at a constant angular speed.

Subsequently, at S30, the CPU 51 calculates a travel path recommended particularly when the vehicle enters the parking lot from the entry road in a case in which the vehicle moves in accordance with the route selected at the above-described S27.

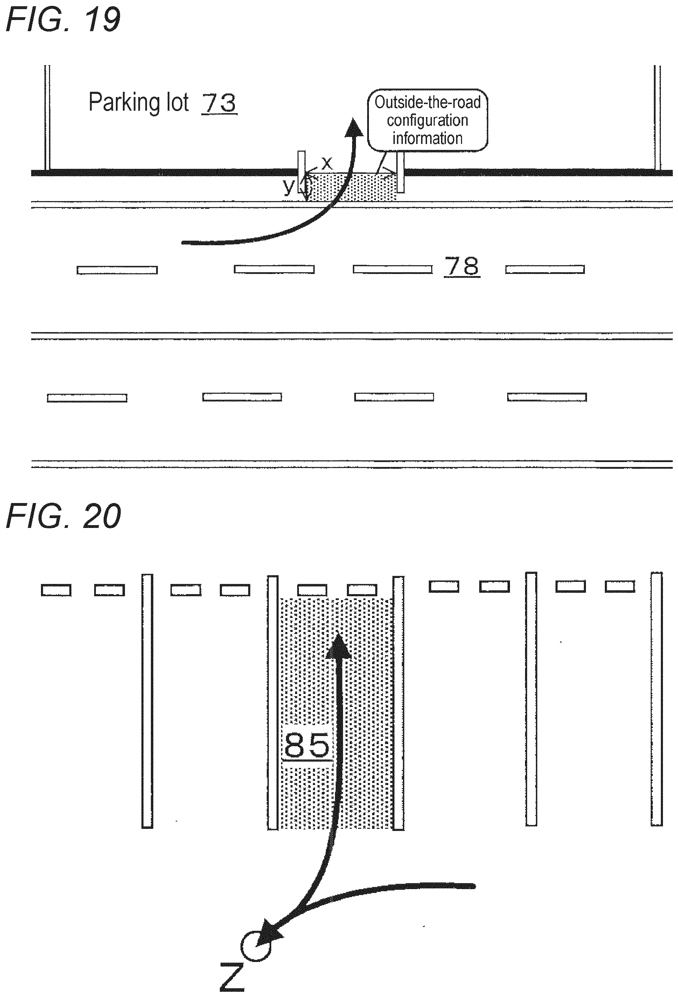

For example, FIG. 19 describes an example of calculating a travel path for a case in which a route in which the vehicle enters an entrance to a parking lot 73 from the far left lane of an entry road 78 is set. First, the CPU 51 identifies, based on the outside-the-road configuration information obtained at the above-described S3, a region between the entry road 78 and the parking lot 73 through which the vehicle can pass (hereinafter, referred to as passage region). For example, in the example shown in FIG. 19, an x (wide) by y (long) rectangular area is a passage region between the entry road 78 and the parking lot 73 through which the vehicle can pass. Then, on condition that the vehicle passes through the passage region from the entry road 78 and enters the entrance to the parking lot 73, a path that is as smooth as possible and that has the shortest possible distance required for entry is calculated using a clothoid curve.

Thereafter, at S31, the CPU 51 calculates a travel path recommended particularly when the vehicle is parked in the parking space selected at the above-described S27 in a case in which the vehicle moves in accordance with the route selected at the above-described S27.

For example, FIG. 20 describes an example of calculating a travel path for a case in which the vehicle is parked in a selected parking space 85 in a parking lot. First, the CPU 51 obtains, based on the facility information obtained at the above-described S3, the configuration of the parking space 85 that is where to park the vehicle and the passage width of a passage that the parking space 85 faces. Thereafter, a back-and-forth movement point z at which the vehicle moves forward and backward is set, and a path is calculated in which the vehicle traveling in parallel to the passage enters the parking space 85 via the back-and-forth movement point z as smooth as possible and at the shortest possible distance required to park the vehicle. Note that for a parking lot that requires head-in parking, a travel path for performing head-in parking is calculated without setting a back-and-forth movement point z.

Thereafter, at S32, the CPU 51 generates a static travel path which is a travel path recommended for the vehicle to travel along, by connecting the travel paths calculated at the above-described S28 to S31. Note that for a section that is not a segment in which a lane change is made or a segment in an intersection or a segment in which the vehicle enters a parking lot or a section in which a parking operation is performed, a path that passes through the center of a lane (in the parking lot, a path that passes through the center of a passage) is a travel path recommended for the vehicle to travel along. Note, however, that for a corner that is curved at a substantially right angle, it is desirable to round a portion that is a corner of a path.

The static travel path generated at the above-described S32 includes a first travel path recommended for the vehicle to travel along in lanes from the travel start point to the entry road facing the entrance to the parking lot; a second travel path recommended for the vehicle to travel along from the entry road to the entrance to the parking lot; and a third travel path recommended for the vehicle to travel along from the entrance to the parking lot to the parking space in which the vehicle is parked. A movement course on foot from the parking space to the entrance to the facility is excluded from the static travel path.

Then, the static travel path generated at the above-described S32 is stored in the flash memory 54, etc., as assistance information used for autonomous driving assistance.

Next, a subprocess of the speed plan creating process performed at the above-described S5 will be described based on FIG. 21. FIG. 21 is a flowchart of a subprocess program of the speed plan creating process.

First, at S41, the CPU 51 obtains, using map information, speed limit information for each road included in the static travel path generated at the above-described S4. Note that for a road whose speed limit information cannot be obtained, a speed limit is identified based on the road type. For example, 30 km/h is set for narrow streets, 40 km/h is set for general roads other than trunk roads, 60 km/h is set for trunk roads such as national highways, and 100 km/h is set for expressways. Note that the speed limit information may be obtained from the highly accurate map information 16 or may be obtained from normal map information used for a course search. In addition, a speed limit set for traveling in the parking lot in which the user parks the vehicle is also obtained. For a parking lot whose speed limit is not set, for example, the speed limit is set at 10 km/h.

Then, at S42, the CPU 51 identifies speed change points which are points in the static travel path at which the speed of the vehicle changes. Here, the speed change points correspond, for example, to an entrance to a parking lot, intersections, curves, railroad crossings, crosswalks, and stops. When there are a plurality of speed change points in the static travel path, the plurality of speed change points are identified. Particularly, an entrance to a parking lot is identified using the facility information 17 and the outside-the-road configuration information 19, and whether there is a sidewalk between the entrance to the parking lot and an entry road is also identified. In addition, a crosswalk and a stop present in the parking lot are identified using the facility information 17.

Subsequently, at S43, the CPU 51 sets, for each of the speed change points identified at the above-described S42, a recommended speed at which the vehicle passes through the speed change point. For example, for an entrance to a parking lot having a sidewalk between an entry road and the parking lot, a mode in which first the vehicle stops (0 km/h) and then passes through at a low speed (e.g., 10 km/h) is set as a recommended speed. On the other hand, for an entrance to a parking lot having no sidewalk between an entry road and the parking lot, a mode in which the vehicle passes through at a low speed (e.g., 10 km/h) is set as a recommended speed. In addition, for a railroad crossing or an intersection with a stop line, a mode in which first the vehicle stops (0 km/h) and then passes through at a low speed (e.g., 10 km/h) is set as a recommended speed. In addition, for a curve or an intersection at which a left or right turn is to be made, a speed at which lateral acceleration (lateral G) occurring in the vehicle does not interfere with autonomous driving assistance and which does not exceed an upper limit value (e.g., 0.2 G) at which a passenger of the vehicle is not given discomfort is set as a recommended speed. The recommended speed is calculated based on, for example, the curvature of a curve or the configuration of an intersection.

Then, at S44, the CPU 51 sets, for a section that does not correspond to the speed change points identified at the above-described S42 (a section between speed change points), a speed limit set for a road or a passage in the section as a recommended speed of the vehicle that travels on the section, based on the speed limit information obtained at the above-described S41. Note, however, that for a road with a narrow road width, a road with poor visibility, a road with heavy traffic, a road with a high traffic accident rate, etc., a speed lower than a speed limit may be set as a recommended speed.

Thereafter, at S45, the CPU 51 generates, as a speed plan for the vehicle, data representing a transition in recommended speed in a traveling direction of the vehicle by combining together the recommended speeds for the speed change points set at the above-described S43 and the recommended speeds for locations other than the speed change points set at the above-described S44. In addition, upon creating a speed plan, the speed plan is modified as appropriate such that a speed change between speed change points satisfies a predetermined condition, more specifically, such that a condition that each of the acceleration and deceleration of the vehicle traveling along the static travel path is less than or equal to a threshold value is satisfied.

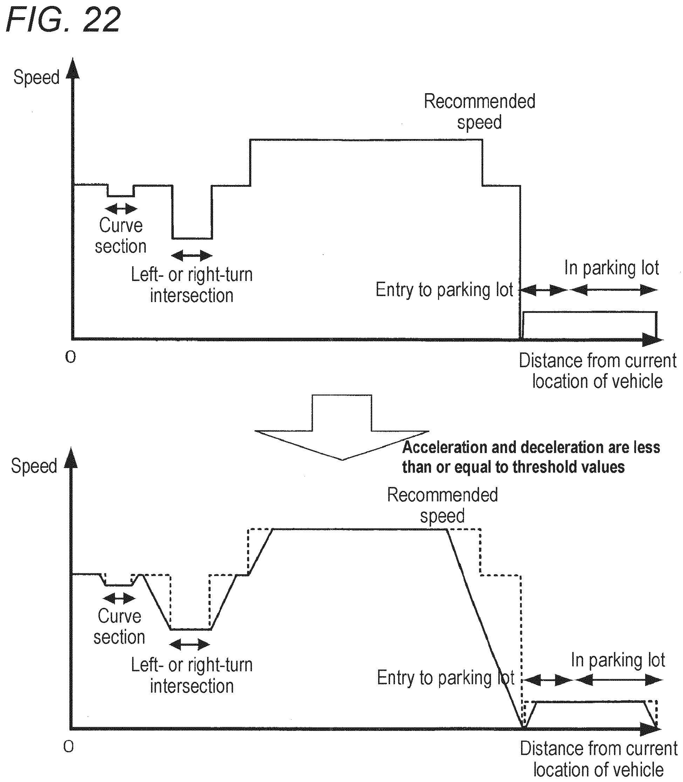

Here, FIG. 22 is a diagram showing an example of the speed plan for the vehicle created at the above-described S45. As shown in FIG. 22, in the speed plan, recommended speeds for locations other than speed change points are basically speed limits set for roads. On the other hand, for the speed change points such as an entrance to a parking lot and an intersection, a speed lower than a speed limit is set as a recommended speed. Furthermore, the recommended speeds are modified so as to satisfy a condition that each of the acceleration and deceleration of the vehicle traveling along a static travel path is less than or equal to a threshold value. Note, however, that the recommended speeds are basically modified only in a reduction way, and the recommended speeds are modified not to be reduced as much as possible in a range in which the condition is satisfied. In addition, the threshold values of acceleration and deceleration are the upper limit values of acceleration and deceleration that do not interfere with travel of the vehicle or autonomous driving assistance and that do not give a passenger of the vehicle discomfort. The threshold value of acceleration and the threshold value of deceleration may have different values. As a result, the recommended speeds are modified as shown in FIG. 22, by which a speed plan is created.

Then, the speed plan created at the above-described S45 is stored in the flash memory 54, etc., as assistance information used for autonomous driving assistance. In addition, an acceleration plan indicating acceleration and deceleration of the vehicle required to implement the speed plan created at the above-described S45 may also be created as assistance information used for autonomous driving assistance.

As described in detail above, the navigation device 1 and a computer program executed by the navigation device 1 according to the present embodiment obtain a parking lot in which a vehicle is parked at a destination (S1), generate a travel path recommended for the vehicle to travel along from a travel start point to an entrance to the parking lot, using at least highly accurate map information 16 including information about lanes and facility information 17 including information about the entrance to the parking lot (S21 to S32), and provide driving assistance for the vehicle based on the generated travel path (S10 and S11), and thus, it becomes possible to identify a recommended travel path from a travel start point to a parking lot that is where to park the vehicle. Furthermore, the identified travel path also includes, in addition to a travel path to an entry road, a recommended travel path for entering the parking lot after reaching the entry road, and thus, it becomes also possible to appropriately provide assistance in vehicle's entry to the parking lot.

In addition, connection information 18 includes information that identifies, for each lane included in the entry road, whether the vehicle can enter the entrance to the parking lot from the lane, and thus, it becomes possible to generate a travel path along which the vehicle travels in a lane on the entry road that allows entry to the entrance to the parking lot.

In addition, outside-the-road configuration information 19 that identifies a region between the entry road and the entrance to the parking lot through which the vehicle can pass is obtained, and a second travel path (a travel path corresponding to movement from the entry road to the entrance to the parking lot) is generated using the connection information 18 and the outside-the-road configuration information 19 (S21 to S32), and thus, it becomes possible to generate, based on the location and configuration of the entrance to the parking lot, an appropriate travel path recommended when the vehicle enters the entrance to the parking lot from the entry road.

In addition, using the highly accurate map information 16, a lane network which is a network representing movement into lanes that can be selected by the vehicle is constructed for roads on which the vehicle travels, an entry point on the entry road at which the vehicle starts entering the parking lot is set in the lane network, and a route that connects the travel start point to the entry point is searched using costs added to the lane network, and a first travel path (a travel path corresponding to movement from the travel start point to the entry road) is generated based on the searched route, and thus, by using the costs added to the lane network, it becomes possible to appropriately identify a way of moving into lanes that is most recommended for a travel section to the entry road. Then, by providing driving assistance based on the identified way of moving into lanes, driving assistance can be appropriately provided.

In addition, passage information about passages in the parking lot through which the vehicle can pass and parking space information about parking spaces provided in the parking lot are obtained, and a travel path recommended for the vehicle to travel along from the entrance to the parking lot to a parking space in which the vehicle is parked is generated using the passage information and the parking space information, and thus, it becomes possible to identify a third travel path (a travel path in the parking lot) recommended to park the vehicle after entering the parking lot. Then, by providing driving assistance based on the identified travel path, driving assistance for traveling in the parking lot can be appropriately provided.

In addition, a parking network which is a network representing a course in the parking lot along which the vehicle can pass is constructed using the passage information, and a route that connects the entrance to the parking lot to the parking space in which the vehicle is parked is searched using costs added to the parking network, and a travel path is generated based on the searched route, and thus, by using the costs added to the parking network, it becomes possible to appropriately identify a movement course of the vehicle that is most recommended in the parking lot. Then, by providing driving assistance based on the identified movement course of the vehicle, driving assistance can be appropriately provided.

In addition, the parking lot is a parking lot belonging to a facility, pedestrian passage information about passages in the parking lot through which a pedestrian can pass is obtained, facility entrance information about an entrance to the facility is obtained, a walk course recommended for a user to move along from a parking space in which the vehicle is parked to the entrance to the facility is generated using the pedestrian passage information and the facility entrance information, and a parking space in which the vehicle is parked is selected taking into account the walk course, and thus, it becomes possible to select a parking space in which the vehicle is parked, taking also into account a burden of user's walk after parking the vehicle in the parking lot.

In addition, using the pedestrian passage information, a walk network which is a network representing a course along which the user can move on foot is constructed targeting a section in which the user moves on foot from the parking lot to the facility, and a route that connects the parking space in which the vehicle is parked to the entrance to the facility is searched using costs added to the walk network, and a walk course is generated based on the searched route, and thus, by using the costs added to the walk network, it becomes possible to appropriately identify a walk course that is most recommended after the parking lot. Since a parking space in which the vehicle is parked is selected taking into account the identified walk course, it becomes possible to select a parking space in which the vehicle is parked, taking also into account a burden of user's walk after parking the vehicle in the parking lot.

In addition, a speed plan for the vehicle that travels along the travel path is created, and driving assistance for the vehicle is provided based on the speed plan, and thus, it becomes possible to accurately identify beforehand recommended speeds used when the vehicle travels along the travel path. Then, based on the identified recommended speeds, a long-range speed plan for the vehicle can be created, enabling appropriate provision of driving assistance based on the speed plan.

In addition, speed change points in the travel path at which the speed of the vehicle changes are identified using the highly accurate map information 16 and the facility information 17, and for each of the speed change points, a recommended speed at which the vehicle passes through the speed change point is generated and a speed plan is created such that a speed change between the speed change points satisfies a predetermined condition, and thus, even when factors that affect the travel speed of the vehicle are present in the travel path, recommended speeds used upon traveling in the travel path can be accurately identified beforehand, taking into account those factors. Then, based on the identified recommended speeds, a long-range speed plan for the vehicle can be created, enabling appropriate provision of driving assistance based on the speed plan.

Note that the present invention is not limited to the above-described embodiment.

For example, in the present embodiment, when a recommended travel path is searched using a network, a plurality of candidate routes are generated and a route with a minimum cost is identified by comparing costs of the respective routes (S27), but for example, one route with a minimum cost may be searched and identified directly from a network using Dijkstra's algorithm.

In addition, in the present embodiment, a case in which a travel start point of the vehicle is on a road is assumed, but the present invention can also be applied to a case in which the travel start point is in a parking lot. In that case, a travel path recommended for the vehicle to travel along from the travel start point to an exit of the parking lot and a travel path recommended for the vehicle to travel along from the exit of the parking lot to a road facing the exit of the parking lot are also calculated. The travel path recommended for the vehicle to travel along from the travel start point to an exit of the parking lot is calculated using a parking network of the parking lot in which the travel start point is present, and the travel path recommended for the vehicle to travel along from the exit of the parking lot to a road facing the exit of the parking lot is calculated using connection information 18 and outside-the-road configuration information 19, as with a path for a case of entering the parking lot (S30 and FIG. 19). In addition, in that case, the connection information 18 includes information indicating a connection relationship between lanes included in the road facing the exit of the parking lot and the exit of the parking lot.

In addition, in the present embodiment, a static travel path is generated that includes a first travel path recommended for the vehicle to travel along in lanes from a travel start point to an entry road facing an entrance to a parking lot, a second travel path recommended for the vehicle to travel along from the entry road to the entrance to the parking lot, and a third travel path recommended for the vehicle to travel along from the entrance to the parking lot to a parking space in which the vehicle is parked, but the static travel path may include only the first travel path and the second travel path. Namely, only the first travel path and the second travel path may be paths to be generated.

In addition, in the present embodiment, a parking space in which the vehicle is parked is selected taking into account both a travel path of the vehicle to a point where the vehicle is parked in a parking space and a movement course on foot after parking the vehicle, but a parking space may be selected taking into account only the travel path of the vehicle to a point where the vehicle is parked in a parking space without taking into account the movement course on foot.

In addition, in the present embodiment, a static travel path that is finally generated is information that identifies a specific path (a set of coordinates or a line) along which the vehicle travels, but such a level of information that does not identify a specific path but can identify roads and lanes where the vehicle is to travel may be obtained. Namely, a route of a network with a minimum lane cost identified at S27 (a way of moving into lanes indicating how the vehicle moves into lanes) may be used as a static travel path, and the processes at and after S28 may not be performed.

In addition, in the present embodiment, upon generating a static travel path, a lane network, a parking network, and a walk network are generated using highly accurate map information 16 and facility information 17 (S22 to S24), but each network targeting roads and parking lots across the country may be stored in advance in a DB and a network may be read from the DB as necessary.

In addition, in the present embodiment, the highly accurate map information included in the server device 4 includes both information about the lane configurations of roads (lane-by-lane road configurations, curvatures, lane widths, etc.) and information about section lines (roadway centerlines, lane boundary lines, roadway outer lines, guidelines, etc.) painted on the roads, but may include only the information about section lines or may include only the information about the lane configurations of roads. For example, even when only the information about section lines is included, it is possible to estimate information corresponding to the information about the lane configurations of roads, based on the information about section lines. In addition, even when only the information about the lane configurations of roads is included, it is possible to estimate information corresponding to the information about section lines, based on the information about the lane configurations of roads. In addition, the "information about section lines" may be information that identifies the types or layout of section lines themselves that mark off lanes, or may be information that identifies whether a lane change can be made between adjacent lanes, or may be information that directly or indirectly identifies the configurations of lanes.

In addition, in the present embodiment, as means for reflecting a dynamic travel path in a static travel path, a part of the static travel path is replaced by the dynamic travel path (S8), but instead of replacement, the static travel path may be modified to approximate to the dynamic travel path.

In addition, in the present embodiment, control, by the vehicle control ECU 40, of all of an accelerator operation, a brake operation, and a steering wheel operation which are operations related to the behavior of the vehicle among vehicle operations is described as autonomous driving assistance for performing autonomous travel independently of user's driving operations. However, the autonomous driving assistance may be control, by the vehicle control ECU 40, of at least one of an accelerator operation, a brake operation, and a steering wheel operation which are operations related to the behavior of the vehicle among vehicle operations. On the other hand, it is described that manual driving by user's driving operations is performing, by the user, of all of an accelerator operation, a brake operation, and a steering wheel operation which are operations related to the behavior of the vehicle among vehicle operations.

In addition, driving assistance of the present invention is not limited to autonomous driving assistance related to autonomous driving of the vehicle. For example, it is also possible to provide driving assistance by displaying a static travel path identified at the above-described S4 and a dynamic travel path generated at the above-described S7 on a navigation screen and providing guidance using voice, a screen, etc. (e.g., guidance on a lane change and guidance on a recommended vehicle speed). In addition, user's driving operations may be assisted by displaying a static travel path and a dynamic travel path on a navigation screen.

In addition, although, in the present embodiment, the configuration is such that the autonomous driving assistance program (FIG. 4) is executed by the navigation device 1, the configuration may be such that an in-vehicle device other than the navigation device 1 or the vehicle control ECU 40 executes the autonomous driving assistance program. In that case, the in-vehicle device or the vehicle control ECU 40 is configured to obtain a current location of the vehicle, map information, etc., from the navigation device 1 or the server device 4. Furthermore, the server device 4 may perform some or all of the steps of the autonomous driving assistance program (FIG. 4). In that case, the server device 4 corresponds to a driving assistance device of the present application.

In addition, the present invention can also be applied to mobile phones, smartphones, tablet terminals, personal computers, etc. (hereinafter, referred to as portable terminals, etc.) in addition to navigation devices. In addition, the present invention can also be applied to a system including a server and a portable terminal, etc. In that case, the configuration may be such that each step of the above-described autonomous driving assistance program (see FIG. 4) is performed by either one of the server and the portable terminal, etc. Note, however, that when the present invention is applied to a portable terminal, etc., a vehicle that can provide autonomous driving assistance and the portable terminal, etc. need to be connected to each other in a communicable manner (it does not matter whether it is a wired or wireless connection).

### REFERENCE SIGNS LIST

1: Navigation device, 2: Driving assistance system, 3: Information delivery center, 4: Server device, 5: Vehicle, 16: Highly accurate map information, 17: Facility information, 18: Connection information, 19: Outside-the-road configuration information, 33: Navigation ECU, 40: Vehicle control ECU, 51: CPU, 75: Lane node, 76: Lane link, 73: Parking lot, 78: Entry road, and 85: Parking space

## Claims

1. A driving assistance device comprising:
parking lot obtaining means for obtaining a parking lot (73) in which a vehicle (5) is to be parked at a destination, wherein the parking lot is a parking lot belonging to a facility;
travel path generating means for generating a travel path recommended for the vehicle (5) to travel along when moving from a travel start point to an entrance to the parking lot, using at least road information including information about lanes, facility information (17) including information about the entrance to the parking lot (73), and connection information (18) indicating a connection relationship between lanes included in an entry road (78) and the entrance to the parking lot (73), the entry road (78) being a road facing the entrance to the parking lot (73);
outside-a-road configuration information obtaining means for obtaining outside-a-road configuration information (19) that identifies a region between the entry road (78) and the entrance to the parking lot (73) through which the vehicle (5) can pass;
passage information obtaining means for obtaining passage information about a passage in the parking lot (73) through which the vehicle (5) can pass;
parking space information obtaining means for obtaining parking space information about a parking space (85) provided in the parking lot (73);
intra-parking lot travel path generating means for generating an intra-parking lot travel path, using the passage information and the parking space information, the intra-parking lot travel path being a travel path recommended for the vehicle (5) to travel along when moving from the entrance to the parking lot (73) to a parking space (85) in which the vehicle (5) is to be parked;
pedestrian passage information obtaining means for obtaining pedestrian passage information about a passage in the parking lot (73) through which a pedestrian can pass;
facility entrance information obtaining means for obtaining facility entrance information about an entrance to the facility;
walk course generating means for generating, using the pedestrian passage information and the facility entrance information, a walk course recommended for a user to move along from the parking space (85) in which the vehicle (5) is to be parked to the entrance to the facility; and
driving assistance means for providing driving assistance for a vehicle (5) based on the travel path and the intra-parking lot travel path;
wherein
the travel path generating means is configured to:
construct a lane network for a road on which a vehicle (5) travels, using the road information, the lane network being a network representing movement into lanes that can be selected by a vehicle (5),
set, in the lane network, an entry point on the entry road (78) at which the vehicle (5) starts entering the parking lot (73),
search for a route that connects the travel start point to the entry point, using costs added to the lane network,
generate, based on a searched route, a part of the travel path, corresponding to movement from the travel start point to the entry road, and
generate another part of the travel path, corresponding to movement from the entry road (78) to the entrance to the parking lot (73), using the connection information and the outside-a-road configuration information (19);
the intra-parking lot travel path generating means is configured to:
construct a parking network using the passage information, the parking network being a network representing a course in the parking lot (73) along which a vehicle (5) can pass, and
search for a route that connects the entrance to the parking lot (73) to a parking space (85) in which a vehicle is parked, using costs added to the parking network, and
generate the intra-parking lot travel path based on a searched route; and
the walk course generating means is configured to:
construct, using the pedestrian passage information, a walk network targeting a section in which a user moves on foot from the parking lot (73) to the facility, the walk network being a network representing a course along which a user can move on foot, and
search for a route that connects a parking space (85) in which a vehicle (5) is parked to the entrance to the facility, using costs added to the walk network, and
generate the walk course based on a searched route; and
the driving assistance device being **characterized in that**:
each one of the lane network, parking network, and walk network is constructed using lane nodes (75) and lane links (76), a lane cost being assigned to each lane link (76), wherein the length of each lane link (76) is used as a reference value, and to obtain the lane cost, the reference value is corrected based on a time required to move through the respective lane link (76), a predetermined value based on the number of lane changes is added to the reference value for each lane link (76) in which a lane change is made, and the reference value is multiplied by a predetermined coefficient for each lane link (76) in which the vehicle (5) travels in a passing lane without making a lane change, and another predetermined value is further added to the reference value for each link (76) in which a lane change is made in any one of a case in which a travel distance on a passing lane before or after making the lane change is longer than a threshold value, a case in which upon making a plurality of lane changes, a time interval between the lane changes is shorter than a threshold value, and a case in which the lane change is made within a predetermined distance before an intersection; and
the intra-parking lot travel path generating means is configured to select, as the parking space (85) in which the vehicle (5) is to be parked, a parking space with a minimum total of lane costs from among empty parking spaces, wherein the total of lane costs for each empty parking space includes both costs for movement of the vehicle to the respective empty parking space and costs for movement on foot from the respective empty parking space, taking into account the walk course.

2. The driving assistance device according to claim 1, wherein the connection information includes information that identifies, for each lane included in the entry road (78), whether the vehicle (5) can enter the entrance to the parking lot (73) from the lane.

3. The driving assistance device according to any one of claims 1 or 2 , comprising speed plan creating means for creating a speed plan for a vehicle (5) that travels along the travel path,
wherein
the driving assistance means is configured to provide driving assistance for a vehicle (5) based on the speed plan.

4. The driving assistance device according to claim 3, comprising:
point identifying means for identifying, using the road information and the facility information (17), speed change points in the travel path at which a speed of a vehicle (5) changes,
wherein
the speed plan creating means is configured to generate, for each of the speed change points, a recommended speed at which the vehicle (5) passes through the speed change point, and creates a speed plan such that a speed change between the speed change points satisfies a predetermined condition.

5. A computer program for causing a computer to function as:
parking lot obtaining means for obtaining a parking lot (73) in which a vehicle (5) is to be parked at a destination, wherein the parking lot is a parking lot belonging to a facility;
travel path generating means for generating a travel path recommended for a vehicle (5) to travel along when the vehicle (5) moves from a travel start point to an entrance to the parking lot, using at least road information including information about lanes, facility information (17) including information about the entrance to the parking lot (73), and connection information (18) indicating a connection relationship between lanes included in an entry road (78) and the entrance to the parking lot (73), the entry road (78) being a road facing the entrance to the parking lot (73);
outside-a-road configuration information obtaining means for obtaining outside-a-road configuration information (19) that identifies a region between the entry road (78) and the entrance to the parking lot (73) through which the vehicle (5) can pass;
passage information obtaining means for obtaining passage information about a passage in the parking lot (73) through which the vehicle (5) can pass;
parking space information obtaining means for obtaining parking space information about a parking space (85) provided in the parking lot (73);
intra-parking lot travel path generating means for generating an intra-parking lot travel path, using the passage information and the parking space information, the intra-parking lot travel path being a travel path recommended for the vehicle (5) to travel along when moving from the entrance to the parking lot (73) to a parking space (85) in which the vehicle (5) is to be parked;
pedestrian passage information obtaining means for obtaining pedestrian passage information about a passage in the parking lot (73) through which a pedestrian can pass;
facility entrance information obtaining means for obtaining facility entrance information about an entrance to the facility;
walk course generating means for generating, using the pedestrian passage information and the facility entrance information, a walk course recommended for a user to move along from the parking space (85) in which the vehicle (5) is to be parked to the entrance to the facility; and
driving assistance means for providing driving assistance for a vehicle (5) based on the travel path and the intra-parking lot travel path;
wherein
the travel path generating means:
constructs a lane network for a road on which a vehicle (5) travels, using the road information, the lane network being a network representing movement into lanes that can be selected by a vehicle (5),
sets, in the lane network, an entry point on the entry road (78) at which the vehicle (5) starts entering the parking lot (73),
searches for a route that connects the travel start point to the entry point, using costs added to the lane network,
generates, based on a searched route, a part of the travel path, corresponding to movement from the travel start point to the entry road, and
generates another part of the travel path, corresponding to movement from the entry road (78) to the entrance to the parking lot (73), using the connection information (18) and the outside-a-road configuration information (19); and
the intra-parking lot travel path generating means:
constructs a parking network using the passage information, the parking network being a network representing a course in the parking lot (73) along which a vehicle (5) can pass, and
searches for a route that connects the entrance to the parking lot (73) to a parking space (85) in which a vehicle is parked, using costs added to the parking network, and generates the intra-parking lot travel path based on a searched route; and
the walk course generating means:
constructs, using the pedestrian passage information, a walk network targeting a section in which a user moves on foot from the parking lot (73) to the facility, the walk network being a network representing a course along which a user can move on foot, and
searches for a route that connects a parking space (85) in which a vehicle (5) is parked to the entrance to the facility, using costs added to the walk network, and
generates the walk course based on a searched route; and
the driving assistance device being **characterized in that** each one of the lane network, parking network, and walk network is constructed using lane nodes (75) and lane links (76), a lane cost being assigned to each lane link (76), wherein the length of each lane link (76) is used as a reference value, and to obtain the lane cost, the reference value is corrected based on a time required to move through the respective lane link (76), a predetermined value based on the number of lane changes is added to the reference value for each lane link (76) in which a lane change is made, and the reference value is multiplied by a predetermined coefficient for each lane link (76) in which the vehicle (5) travels in a passing lane without making a lane change, and another predetermined value is further added to the reference value for each link (76) in which a lane change is made in any one of a case in which a travel distance on a passing lane before or after making the lane change is longer than a threshold value, a case in which upon making a plurality of lane changes, a time interval between the lane changes is shorter than a threshold value, and a case in which the lane change is made within a predetermined distance before an intersection; and
the intra-parking lot travel path generating means selects, as the parking space (85) in which the vehicle (5) is to be parked, a parking space with a minimum total of lane costs from among empty parking spaces, wherein the total of lane costs for each empty parking space includes both costs for movement of the vehicle to the respective empty parking space and costs for movement on foot from the respective empty parking space, taking into account the walk course.

## Patentansprüche

1. Fahrassistenzvorrichtung, umfassend:
Mittel zum Erzielen einer Parkfläche, um eine Parkfläche (73) zu erzielen, auf der ein Fahrzeug (5) an einem Zielort parken soll, wobei die Parkfläche eine Parkfläche ist, die zu einer Einrichtung gehört;
Mittel zum Generieren eines Fahrwegs, um einen Fahrweg, der dazu empfohlen wird, dass das Fahrzeug (5) diesen verfolgt, wenn es sich von einem Fahrtstartpunkt zu einer Einfahrt auf die Parkfläche bewegt, unter Verwendung von mindestens Straßeninformationen, die Informationen über Fahrspuren, von Einrichtungsinformationen (17), die Informationen über die Einfahrt auf die Parkfläche (73) umfassen, und von Verbindungsinformationen (18), die eine Verbindungsbeziehung zwischen den Fahrspuren, die in einer Eingangsstraße (78) enthalten sind, und der Einfahrt auf die Parkfläche (73) umfassen, wobei die Eingangsstraße (78) eine Straße ist, die der Einfahrt auf die Parkfläche (73) gegenüberliegt, zu generieren;
Mittel zum Erzielen von Informationen über eine Konfiguration außerhalb einer Straße, um Informationen über eine Konfiguration außerhalb einer Straße (19) zu erzielen, die eine Region zwischen der Eingangsstraße (78) und der Einfahrt auf die Parkfläche (73), durch die das Fahrzeug (5) fahren kann, identifizieren;
Mittel zum Erzielen von Durchgangsinformationen, um Durchgangsinformationen über einen Durchgang in der Parkfläche (73), durch den das Fahrzeug (5) fahren kann, zu erzielen;
Mittel zum Erzielen von Parkplatzinformationen, um Parkplatzinformationen über einen Parkplatz (85), der in der Parkfläche (73) bereitgestellt wird, zu erzielen;
Mittel zum Generieren eines Fahrwegs innerhalb der Parkfläche, um einen Fahrweg innerhalb der Parkfläche unter Verwendung der Durchgangsinformationen und der Parkplatzinformationen zu generieren, wobei der Fahrweg innerhalb der Parkfläche ein Fahrweg ist, der dazu empfohlen wird, dass das Fahrzeug (5) diesen verfolgt, wenn es sich von der Einfahrt auf die Parkfläche (73) zu einem Parkplatz (85), auf dem das Fahrzeug (5) parken soll, bewegt;
Mittel zum Erzielen von Informationen über einen Fußgängerdurchgang, um Informationen über einen Fußgängerdurchgang für einen Durchgang in der Parkfläche (73), durch den ein Fußgänger gehen kann, zu erzielen;
Mittel zum Erzielen von Informationen über einen Einrichtungseingang, um Informationen über einen Einrichtungseingang für einen Eingang zu der Einrichtung zu erzielen;
Mittel zum Generieren eines Fußwegs, um unter Verwendung der Informationen über einen Fußgängerdurchgang und der Informationen über einen Einrichtungseingang einen Fußweg zu generieren, der dazu empfohlen wird, dass ein Benutzer diesen von dem Parkplatz (85), auf dem das Fahrzeug (5) parken soll, bis zu dem Eingang zu der Einrichtung verfolgt; und
Fahrassistenzmittel, um Fahrassistenz für ein Fahrzeug (5) basierend auf dem Fahrweg und dem Fahrweg innerhalb der Parkfläche bereitzustellen;
wobei
die Mittel zum Generieren eines Fahrwegs konfiguriert sind zum:
Aufbauen eines Fahrspurnetzwerks für eine Straße, auf der ein Fahrzeug (5) fährt, unter Verwendung der Straßeninformationen, wobei das Fahrspurnetzwerk ein Netzwerk ist, das eine Bewegung auf Fahrspuren darstellt, die von einem Fahrzeug (5) ausgewählt werden können,
Einstellen, in dem Fahrspurnetzwerk, eines Eingangspunktes auf der Eingangsstraße (78), an dem das Fahrzeug (5) damit beginnt, in den Parkfläche (73) einzutreten,
Suchen nach einer Strecke, die den Fahrstartpunkt mit dem Eingangspunkt verbindet, unter Verwendung von Kosten, die zu dem Fahrspurnetzwerk hinzugefügt werden,
Generieren, basierend auf einer gesuchten Strecke, eines Teils des Fahrwegs, welcher der Bewegung von dem Fahrstartpunkt zu der Eingangsstraße entspricht, und
Generieren eines anderen Teils des Fahrwegs, welcher der Bewegung von der Eingangsstraße (78) zu der Einfahrt auf die Parkfläche (73) entspricht, unter Verwendung der Verbindungsinformationen und der Informationen über eine Konfiguration außerhalb einer Straße (19);
wobei die Mittel zum Generieren eines Fahrwegs innerhalb der Parkfläche konfiguriert sind zum:
Aufbauen eines Parknetzwerks unter Verwendung der Durchgangsinformationen, wobei das Parknetzwerk ein Netzwerk ist, das einen Verlauf in der Parkfläche (73), den ein Fahrzeug (5) verfolgen kann, darstellt, und
Suchen nach einer Strecke, welche die Einfahrt auf die Parkfläche (73) mit einem Parkplatz (85), auf dem ein Fahrzeug parkt, unter Verwendung von Kosten, die zu dem Parknetzwerk hinzugefügt werden, verbindet, und
Generieren des Fahrwegs innerhalb der Parkfläche basierend auf einer gesuchten Strecke; und
wobei die Mittel zum Generieren eines Fußwegs konfiguriert sind zum:
Aufbauen, unter Verwendung der Informationen über einen Fußgängerdurchgang, eines Gehnetzwerks, das auf ein Teilstück abzielt, in dem sich ein Benutzer zu Fuß von der Parkfläche (73) zu der Einrichtung bewegt, wobei das Gehnetzwerk ein Netzwerk ist, das einen Verlauf darstellt, den ein Benutzer zu Fuß verfolgen kann, und
Suchen nach einer Strecke, die einen Parkplatz (85), auf dem ein Fahrzeug (5) parkt, mit dem Eingang zu der Einrichtung verbindet, unter Verwendung von Kosten, die zu dem Gehnetzwerk hinzugefügt werden, und
Generieren des Fußweges basierend auf einer gesuchten Strecke; und
wobei die Fahrassistenzvorrichtung **dadurch gekennzeichnet ist, dass**:
jedes von dem Fahrspurnetzwerk, dem Parknetzwerk und dem Gehnetzwerk unter Verwendung von Fahrspurknoten (75) und Fahrspurzwischenstücken (76) aufgebaut wird, wobei jedem Fahrspurzwischenstück (76) Fahrspurkosten zugewiesen sind, wobei die Länge jedes Fahrspurzwischenstücks (76) als ein Referenzwert verwendet wird, und um die Fahrspurkosten zu erzielen, der Referenzwert basierend auf einer Zeit korrigiert wird, die benötigt wird, um sich durch das jeweilige Fahrspurzwischenstück (76) hindurch zu bewegen, ein vorbestimmter Wert basierend auf der Anzahl von Spurwechseln zu dem Referenzwert für jedes Fahrspurzwischenstück (76), in dem ein Spurwechsel erfolgt, hinzugefügt wird, und der Referenzwert mit einem vorbestimmten Koeffizienten für jedes Fahrspurzwischenstück (76), auf dem das Fahrzeug (5) auf einer Überholspur fährt, ohne einen Spurwechsel vorzunehmen, multipliziert wird, und
ein anderer vorbestimmter Wert ferner zu dem Referenzwert für jedes Zwischenstück (76), auf dem ein Spurwechsel erfolgt, in einem beliebigen Fall von einem Fall, bei dem ein Fahrabstand auf einer Überholspur vor oder nach dem Vornehmen eines Spurwechsels länger als ein Schwellenwert ist, einem Fall, bei dem nach dem Vornehmen einer Vielzahl von Spurwechseln ein Zeitintervall zwischen den Spurwechseln kürzer als ein Schwellenwert ist, und einem Fall, bei dem der Spurwechsel innerhalb eines vorbestimmten Abstands vor einer Kreuzung erfolgt, hinzugefügt wird; und
die Mittel zum Generieren eines Fahrwegs innerhalb einer Parkfläche dazu konfiguriert sind, als den Parkplatz (85), auf dem das Fahrzeug (5) parken soll, einen Parkplatz mit einer Mindestsumme von Fahrspurkosten aus freien Parkplätzen auszuwählen, wobei die Summe von Fahrspurkosten für jeden freien Parkplatz sowohl Kosten für die Bewegung des Fahrzeugs zu dem jeweiligen freien Parkplatz als auch Kosten für die Bewegung zu Fuß von dem jeweiligen freien Parkplatz unter Berücksichtigung des Fußwegs umfassen.

2. Fahrassistenzvorrichtung nach Anspruch 1, wobei die Verbindungsinformationen Informationen umfassen, die für jede Fahrspur, die in der Eingangsstraße (78) enthalten ist, identifiziert, ob das Fahrzeug (5) in die Einfahrt auf die Parkfläche (73) von der Fahrspur aus einfahren kann.

3. Fahrassistenzvorrichtung nach einem der Ansprüche 1 oder 2, umfassend Mittel zum Erstellen eines Geschwindigkeitsplans, um einen Geschwindigkeitsplan für ein Fahrzeug (5), das auf dem Fahrweg fährt, zu erstellen,
wobei
die Fahrassistenzmittel dazu konfiguriert sind, Fahrassistenz für ein Fahrzeug (5) basierend auf dem Geschwindigkeitsplan bereitzustellen.

4. Fahrassistenzvorrichtung nach Anspruch 3, umfassend:
Punktidentifizierungsmittel, um unter Verwendung der Straßeninformationen und der Einrichtungsinformationen (17) Geschwindigkeitsänderungspunkte auf dem Fahrweg, an denen sich eine Geschwindigkeit eines Fahrzeugs (5) ändert, zu identifizieren,
wobei
die Mittel zum Erstellen eines Geschwindigkeitsplans dazu konfiguriert sind, für jeden der Geschwindigkeitsänderungspunkte eine empfohlene Geschwindigkeit zu generieren, mit der das Fahrzeug (5) durch den Geschwindigkeitsänderungspunkt fährt, und einen Geschwindigkeitsplan derart erstellt, dass eine Geschwindigkeitsänderung zwischen den Geschwindigkeitsänderungspunkten eine vorbestimmte Bedingung erfüllt.

5. Computerprogramm zum Bewirken, dass ein Computer dient als:
Mittel zum Erzielen einer Parkfläche, um eine Parkfläche (73), auf der ein Fahrzeug (5) an einem Zielort parken soll, zu erzielen, wobei die Parkfläche eine Parkfläche ist, die zu einer Einrichtung gehört;
Mittel zum Generieren eines Fahrwegs, um einen Fahrweg, der dazu empfohlen wird, dass ein Fahrzeug (5) diesen verfolgt, wenn sich das Fahrzeug (5) von einem Fahrstartpunkt zu einer Einfahrt auf die Parkfläche bewegt, unter Verwendung von mindestens Straßeninformationen, die Informationen über Fahrspuren umfassen, von Einrichtungsinformationen (17), die Informationen über die Einfahrt auf die Parkfläche (73) umfassen, und von Verbindungsinformationen (18), die eine Verbindungsbeziehung zwischen Fahrspuren, die in einer Eingangsstraße (78) enthalten sind, und der Einfahrt auf die Parkfläche (73) angeben, wobei die Eingangsstraße (78) eine Straße ist, die der Einfahrt auf die Parkfläche (73) gegenüberliegt;
Mittel zum Erzielen von Informationen über eine Konfiguration außerhalb einer Straße, um Informationen über eine Konfiguration außerhalb einer Straße (19) zu erzielen, die eine Region zwischen der Eingangsstraße (78) und der Einfahrt auf die Parkfläche (73), durch die hindurch das Fahrzeug (5) fahren kann, identifizieren;
Mittel zum Erzielen von Durchgangsinformationen, um Durchgangsinformationen über einen Durchgang in der Parkfläche (73), durch den hindurch das Fahrzeug (5) fahren kann, zu erzielen;
Mittel zum Erzielen von Parkplatzinformationen, um Parkplatzinformationen über einen Parkplatz (85), der in der Parkfläche (73) bereitgestellt wird, zu erzielen;
Mittel zum Generieren eines Fahrwegs innerhalb einer Parkfläche, um einen Fahrweg innerhalb einer Parkfläche unter Verwendung der Durchgangsinformationen und der Parkplatzinformationen zu generieren, wobei der Fahrweg innerhalb der Parkfläche ein Fahrweg ist, der dazu empfohlen wird, dass das Fahrzeug (5) diesen verfolgt, wenn es sich von der Einfahrt auf die Parkfläche (73) bis zu einem Parkplatz (85), auf dem das Fahrzeug (5) parken soll, bewegt;
Mittel zum Erzielen von Informationen über einen Fußgängerdurchgang, um Informationen über einen Fußgängerdurchgang über einen Durchgang in der Parkfläche (73), durch den hindurch ein Fußgänger gehen kann, zu erzielen;
Mittel zum Erzielen von Informationen über einen Einrichtungseingang, um Informationen über eine Einrichtungseinfahrt für einen Eingang zu der Einrichtung zu erzielen;
Mittel zum Generieren eines Fußwegs, um unter Verwendung der Informationen über einen Fußgängerdurchgang und der Informationen über eine Einrichtungseingang einen Fußweg zu generieren, der dafür empfohlen wird, dass sich ein Benutzer darauf von dem Parkplatz (85), auf dem das Fahrzeug (5) parken soll, bis zu der Einfahrt zu der Einrichtung bewegt; und
Fahrassistenzmittel, um Fahrassistenz für ein Fahrzeug (5) basierend auf dem Fahrweg und dem Fahrweg innerhalb der Parkfläche bereitzustellen;
wobei
die Mittel zum Generieren eines Fahrwegs:
ein Fahrspurnetzwerk für eine Straße, auf der ein Fahrzeug (5) fährt, unter Verwendung der Straßeninformationen aufbaut, wobei das Fahrspurnetzwerk ein Netzwerk ist, das eine Bewegung auf Fahrspuren, die von einem Fahrzeug (5) ausgewählt werden können, darstellt,
in dem Fahrspurnetzwerk einen Eingangspunkt auf der Eingangsstraße (78) einstellen, an dem das Fahrzeug (5) damit beginnt, in die Parkfläche (73) einzufahren,
nach einem Weg suchen, der den Fahrstartpunkt mit dem Eingangspunkt verbindet, unter Verwendung von Kosten, die zu dem Fahrspurnetzwerk hinzugefügt werden,
basierend auf einer gesuchten Strecke einen Teil des Fahrwegs generieren, welcher der Bewegung von dem Fahrstartpunkt zu der Eingangsstraße entspricht, und
einen anderen Teil des Fahrwegs generieren, welcher der Bewegung von der Eingangsstraße (78) zu der Einfahrt auf die Parkfläche (73) entspricht, unter Verwendung der Verbindungsinformationen (18) und der Informationen über eine Konfiguration außerhalb einer Straße (19); und
die Mittel zum Generieren eines Fahrwegs innerhalb einer Parkfläche:
ein Parknetzwerk unter Verwendung der Durchgangsinformationen aufbauen, wobei das Parknetzwerk ein Netzwerk ist, das einen Verlauf auf der Parkfläche (73), den ein Fahrzeug (5) verfolgen kann, darstellt, und
nach einem Weg suchen, der die Einfahrt auf die Parkfläche (73) mit einem Parkplatz (85) verbindet, auf dem ein Fahrzeug parkt, unter Verwendung von Kosten, die zu dem Parknetzwerk hinzugefügt werden, und den Fahrweg innerhalb der Parkfläche basierend auf einer gesuchten Strecke generieren; und
die Mittel zum Generieren eines Fußwegs:
unter Verwendung der Informationen über einen Fußgängerdurchgang ein Gehnetzwerk aufbauen, das auf ein Teilstück abzielt, auf dem sich ein Benutzer zu Fuß von der Parkfläche (73) zu der Einrichtung bewegt, wobei das Gehnetzwerk ein Netzwerk ist, das einen Verlauf, den ein Benutzer zu Fuß verfolgen kann, darstellt, und
nach einem Weg suchen, der einen Parkplatz (85), auf dem ein Fahrzeug (5) parkt, mit dem Eingang zu der Einrichtung verbindet, unter Verwendung von Kosten, die zu dem Gehnetzwerk hinzugefügt werden, und
den Fußweg basierend auf einer gesuchten Strecke generieren; und
wobei die Fahrassistenzvorrichtung **dadurch gekennzeichnet ist, dass** jedes von dem Fahrspurnetzwerk, dem Parknetzwerk und dem Gehnetzwerk unter Verwendung von Fahrspurknoten (75) und Fahrspurzwischenstücken (76) aufgebaut wird, wobei jedem Fahrspurzwischenstück (76) Fahrspurkosten zugewiesen werden, wobei die Länge jedes Fahrspurzwischenstücks (76) als ein Referenzwert verwendet wird, und um die Fahrspurkosten zu erzielen, der Referenzwert basierend auf einer Zeit, die benötigt wird, um sich über das jeweilige Fahrspurzwischenstück (76) zu bewegen, korrigiert wird, ein vorbestimmter Wert basierend auf der Anzahl von Spurenwechseln zu dem Referenzwert für jedes Fahrspurzwischenstück (76), in dem ein Spurenwechsel erfolgt, zu dem Referenzwert hinzugefügt wird, und der Referenzwert mit einem vorbestimmten Koeffizienten für jedes Fahrspurzwischenstück (76), auf dem das Fahrzeug (5) auf einer Überholspur fährt, ohne einen Spurenwechsel vorzunehmen, multipliziert wird, und ein anderer vorbestimmter Wert ferner zu dem Referenzwert für jedes Zwischenstück (76), in dem ein Spurwechsel erfolgt, hinzugefügt wird, in einem von einem Fall, bei dem ein Fahrabstand auf einer Überholspur vor oder nach dem Vornehmen des Spurwechsels länger als ein Schwellenwert ist, einem Fall, bei dem bei dem Vornehmen einer Vielzahl von Spurwechseln ein Zeitintervall zwischen den Spurwechseln kürzer als ein Schwellenwert ist, und einem Fall, bei dem der Spurwechsel in einem vorbestimmten Abstand vor einer Kreuzung erfolgt; und
die Mittel zum Generieren eines Fahrwegs innerhalb einer Parkfläche als den Parkplatz (85), auf dem das Fahrzeug (5) parken soll, einen Parkplatz mit einer Mindestsumme von Fahrspurkosten aus freien Parkplätzen auswählen, wobei die Summe von Fahrspurkosten für jeden freien Parkplatz sowohl Kosten für die Bewegung des Fahrzeugs zu dem jeweiligen freien Parkplatz als auch Kosten für die Bewegung zu Fuß von dem jeweiligen freien Parkplatz unter Berücksichtigung des Fußwegs umfasst.

## Revendications

1. Dispositif d'aide à la conduite comprenant :
des moyens d'obtention de parc de stationnement pour obtenir un parc de stationnement (73) où un véhicule (5) doit être garé à une destination, dans lequel le parc de stationnement est un parc de stationnement appartenant à une installation ;
des moyens de génération de chemin de circulation pour générer un chemin de circulation le long duquel il est recommandé au véhicule (5) de circuler lorsqu'il se déplace d'un point de départ de circulation jusqu'à une entrée du parc de stationnement en utilisant au moins des informations de route comportant des informations concernant les voies, des informations d'installation (17) comportant des informations concernant l'entrée du parc de stationnement (73) et des informations de connexion (18) indiquant une relation de connexion entre les voies incluses dans une route d'accès (78) et l'entrée du parc de stationnement (73), la route d'accès (78) étant une route faisant face à l'entrée du parc de stationnement (73) ;
des moyens d'obtention d'informations de configuration hors route pour obtenir des informations de configuration hors route (19) qui identifient une région entre la route d'accès (78) et l'entrée du parc de stationnement (73) par laquelle le véhicule (5) peut passer ;
des moyens d'obtention d'informations de passage pour obtenir des informations de passage concernant un passage dans le parc de stationnement (73) par lequel le véhicule (5) peut passer ;
des moyens d'obtention d'informations de place de stationnement pour obtenir des informations de place de stationnement concernant une place de stationnement (85) prévue dans le parc de stationnement (73) ;
des moyens de génération de chemin de circulation intra-parc de stationnement pour générer un chemin de circulation intra-parc de stationnement en utilisant les informations de passage et les informations de place de stationnement, le chemin de circulation intra-parc de stationnement étant un chemin de circulation le long duquel il est recommandé au véhicule (5) de circuler lorsqu'il se déplace de l'entrée du parc de stationnement (73) jusqu'à une place de stationnement (85) où le véhicule (5) doit être garé ;
des moyens d'obtention d'informations de passage pour piétons pour obtenir des informations de passage pour piétons concernant un passage dans le parc de stationnement (73) par lequel un piéton peut passer ;
des moyens d'obtention d'informations d'entrée d'installation pour obtenir des informations d'entrée d'installation concernant une entrée de l'installation ;
des moyens de génération de parcours de marche pour, en utilisant les informations de passage pour piétons et les informations d'entrée d'installation, générer un parcours de marche le long duquel il est recommandé à un utilisateur de se déplacer depuis la place de stationnement (85) où le véhicule (5) doit être garé jusqu'à l'entrée de l'installation ; et
des moyens d'aide à la conduite pour fournir une aide à la conduite d'un véhicule (5) sur la base du chemin de circulation et du chemin de circulation intra-parc de stationnement ;
dans lequel
les moyens de génération de chemin de circulation sont configurés pour :
construire un réseau de voies d'une route sur laquelle un véhicule (5) circule en utilisant les informations de route, le réseau de voies étant un réseau représentant le déplacement dans des voies pouvant être sélectionnées par un véhicule (5),
définir dans le réseau de voies un point d'accès sur la route d'accès (78) au niveau duquel le véhicule (5) commence à entrer dans le parc de stationnement (73),
rechercher un itinéraire qui connecte le point de départ de circulation au point d'accès en utilisant des coûts associés au réseau de voies,
sur la base d'un itinéraire recherché, générer une partie du chemin de circulation correspondant au déplacement depuis le point de départ de circulation jusqu'à la route d'accès, et
générer une autre partie du chemin de circulation correspondant au déplacement depuis la route d'accès (78) jusqu'à l'entrée du parc de stationnement (73) en utilisant les informations de connexion et les informations de configuration hors route (19) ;
les moyens de génération de chemin de circulation intra-parc de stationnement sont configurés pour :
construire un réseau de stationnement en utilisant les informations de passage, le réseau de stationnement étant un réseau représentant un parcours dans le parc de stationnement (73) le long duquel un véhicule (5) peut passer, et
rechercher un itinéraire qui connecte l'entrée du parc de stationnement (73) à une place de stationnement (85) où un véhicule est garé en utilisant des coûts associés au réseau de stationnement, et
générer le chemin de circulation intra-parc de stationnement sur la base d'un itinéraire recherché ; et
les moyens de génération de parcours de marche sont configurés pour :
en utilisant les informations de passage pour piétons, construire un réseau de marche ciblant une section où un utilisateur se déplace à pied depuis le parc de stationnement (73) jusqu'à l'installation, le réseau de marche étant un réseau représentant un parcours le long duquel un utilisateur peut se déplacer à pied, et
rechercher un itinéraire qui connecte une place de stationnement (85) où un véhicule (5) est garé à l'entrée de l'installation en utilisant des coûts ajoutés au réseau de marche, et
générer le parcours de marche sur la base d'un itinéraire recherché ; et
le dispositif d'aide à la conduite étant **caractérisé en ce que** :
chacun parmi le réseau de voies, le réseau de stationnement et le réseau de marche est construit en utilisant des nœuds de voie (75) et des liaisons de voie (76), un coût de voie étant attribué à chaque liaison de voie (76), dans lequel la longueur de chaque liaison de voie (76) est utilisée comme valeur de référence, et pour obtenir le coût de voie, la valeur de référence est corrigée sur la base d'un temps nécessaire pour se déplacer sur la liaison de voie (76) respective, une valeur prédéterminée basée sur le nombre de changements de voie est ajoutée à la valeur de référence pour chaque liaison de voie (76) où un changement de voie est effectué, et la valeur de référence est multipliée par un coefficient prédéterminé pour chaque liaison de voie (76) où le véhicule (5) circule dans une voie de dépassement sans effectuer de changement de voie, et une autre valeur prédéterminée est en outre ajoutée à la valeur de référence pour chaque liaison (76) où un changement de voie est effectué dans l'un quelconque parmi un cas où une distance de circulation sur une voie de dépassement avant ou après avoir effectué le changement de voie est plus grand qu'une valeur seuil, un cas où en effectuant une pluralité de changements de voie, un intervalle de temps entre les changements de voie est inférieur à une valeur seuil, et un cas où le changement de voie est effectué à une distance prédéterminée avant un carrefour ; et
les moyens de génération de chemin de circulation intra-parc de stationnement sont configurés pour sélectionner comme place de stationnement (85) où le véhicule (5) doit être garé une place de stationnement ayant un total minimal des coûts de voie parmi les places de stationnement vides, dans lequel le total des coûts de voie pour chaque place de stationnement vide comporte à la fois les coûts du déplacement du véhicule vers la place de stationnement vide respective et les coûts du déplacement à pied depuis la place de stationnement vide respective en tenant compte du parcours de marche.

2. Dispositif d'aide à la conduite selon la revendication 1, dans lequel les informations de connexion comportent des informations qui déterminent pour chaque voie incluse dans la route d'accès (78) si le véhicule (5) peut entrer dans l'entrée du parc de stationnement (73) depuis la voie.

3. Dispositif d'aide à la conduite selon l'une des revendications 1 ou 2, comprenant des moyens de création de plan de vitesse pour créer un plan de vitesse pour un véhicule (5) qui circule le long du chemin de circulation,
dans lequel
les moyens d'aide à la conduite sont configurés pour fournir une aide à la conduite d'un véhicule (5) sur la base du plan de vitesse.

4. Dispositif d'aide à la conduite selon la revendication 3, comprenant :
des moyens d'identification de points pour, en utilisant les informations de route et les informations d'installation (17), identifier des points de changement de vitesse dans le chemin de circulation auxquels une vitesse d'un véhicule (5) change,
dans lequel
les moyens de création de plan de vitesse sont configurés pour générer pour chacun des points de changement de vitesse une vitesse recommandée à laquelle le véhicule (5) passe par le point de changement de vitesse, et créer un plan de vitesse de sorte qu'un changement de vitesse entre les points de changement de vitesse satisfasse à une condition prédéterminée.

5. Programme informatique pour amener un ordinateur à fonctionner comme :
des moyens d'obtention de parc de stationnement pour obtenir un parc de stationnement (73) où un véhicule (5) doit être garé à une destination, dans lequel le parc de stationnement est un parc de stationnement appartenant à une installation ;
des moyens de génération de chemin de circulation pour générer un chemin de circulation le long duquel il est recommandé au véhicule (5) de circuler lorsque le véhicule (5) se déplace d'un point de départ de circulation jusqu'à une entrée du parc de stationnement en utilisant au moins des informations de route comportant des informations concernant les voies, des informations d'installation (17) comportant des informations concernant l'entrée du parc de stationnement (73) et des informations de connexion (18) indiquant une relation de connexion entre les voies incluses dans une route d'accès (78) et l'entrée du parc de stationnement (73), la route d'accès (78) étant une route faisant face à l'entrée du parc de stationnement (73) ;
des moyens d'obtention d'informations de configuration hors route pour obtenir des informations de configuration hors route (19) qui identifient une région entre la route d'accès (78) et l'entrée du parc de stationnement (73) par laquelle le véhicule (5) peut passer ;
des moyens d'obtention d'informations de passage pour obtenir des informations de passage concernant un passage dans le parc de stationnement (73) par lequel le véhicule (5) peut passer ;
des moyens d'obtention d'informations de place de stationnement pour obtenir des informations de place de stationnement concernant une place de stationnement (85) prévue dans le parc de stationnement (73) ;
des moyens de génération de chemin de circulation intra-parc de stationnement pour générer un chemin de circulation intra-parc de stationnement en utilisant les informations de passage et les informations de place de stationnement, le chemin de circulation intra-parc de stationnement étant un chemin de circulation le long duquel il est recommandé au véhicule (5) de circuler lorsqu'il se déplace de l'entrée du parc de stationnement (73) jusqu'à une place de stationnement (85) où le véhicule (5) doit être garé ;
des moyens d'obtention d'informations de passage pour piétons pour obtenir des informations de passage pour piétons concernant un passage dans le parc de stationnement (73) par lequel un piéton peut passer ;
des moyens d'obtention d'informations d'entrée d'installation pour obtenir des informations d'entrée d'installation concernant une entrée de l'installation ;
des moyens de génération de parcours de marche pour, en utilisant les informations de passage pour piétons et les informations d'entrée d'installation, générer un parcours de marche le long duquel il est recommandé à un utilisateur de se déplacer depuis la place de stationnement (85) où le véhicule (5) doit être garé jusqu'à l'entrée de l'installation ; et
des moyens d'aide à la conduite pour fournir une aide à la conduite d'un véhicule (5) sur la base du chemin de circulation et du chemin de circulation intra-parc de stationnement ;
dans lequel
les moyens de génération de chemin de circulation :
construisent un réseau de voies d'une route sur laquelle un véhicule (5) circule en utilisant les informations de route, le réseau de voies étant un réseau représentant le déplacement dans des voies pouvant être sélectionnées par un véhicule (5),
définissent dans le réseau de voies un point d'accès sur la route d'accès (78) au niveau duquel le véhicule (5) commence à entrer dans le parc de stationnement (73),
recherchent un itinéraire qui connecte le point de départ de circulation au point d'accès en utilisant des coûts associés au réseau de voies,
sur la base d'un itinéraire recherché, génèrent une partie du chemin de circulation correspondant au déplacement depuis le point de départ de circulation jusqu'à la route d'accès, et
génèrent une autre partie du chemin de circulation correspondant au déplacement depuis la route d'accès (78) jusqu'à l'entrée du parc de stationnement (73) en utilisant les informations de connexion (18) et les informations de configuration hors route (19) ; et
les moyens de génération de chemin de circulation intra-parc de stationnement :
construisent un réseau de stationnement en utilisant les informations de passage, le réseau de stationnement étant un réseau représentant un parcours dans le parc de stationnement (73) le long duquel un véhicule (5) peut passer, et
recherchent un itinéraire qui connecte l'entrée du parc de stationnement (73) à une place de stationnement (85) où un véhicule est garé en utilisant des coûts associés au réseau de stationnement, et
génèrent le chemin de circulation intra-parc de stationnement sur la base d'un itinéraire recherché ; et
les moyens de génération de parcours de marche :
en utilisant les informations de passage pour piétons, construisent un réseau de marche ciblant une section où un utilisateur se déplace à pied depuis le parc de stationnement (73) jusqu'à l'installation, le réseau de marche étant un réseau représentant un parcours le long duquel un utilisateur peut se déplacer à pied, et
recherchent un itinéraire qui connecte une place de stationnement (85) où un véhicule (5) est garé à l'entrée de l'installation en utilisant des coûts ajoutés au réseau de marche, et
génèrent le parcours de marche sur la base d'un itinéraire recherché ; et
le dispositif d'aide à la conduite étant **caractérisé en ce que** chacun parmi le réseau de voies, le réseau de stationnement et le réseau de marche est construit en utilisant des nœuds de voie (75) et des liaisons de voie (76), un coût de voie étant attribué à chaque liaison de voie (76), dans lequel la longueur de chaque liaison de voie (76) est utilisée comme valeur de référence, et pour obtenir le coût de voie, la valeur de référence est corrigée sur la base d'un temps nécessaire pour se déplacer sur la liaison de voie (76) respective, une valeur prédéterminée basée sur le nombre de changements de voie est ajoutée à la valeur de référence pour chaque liaison de voie (76) où un changement de voie est effectué, et la valeur de référence est multipliée par un coefficient prédéterminé pour chaque liaison de voie (76) où le véhicule (5) circule dans une voie de dépassement sans effectuer de changement de voie, et une autre valeur prédéterminée est en outre ajoutée à la valeur de référence pour chaque liaison (76) où un changement de voie est effectué dans l'un quelconque parmi un cas où en effectuant une pluralité de changements de voie, un intervalle de temps, un cas où en effectuant une pluralité de changements de voie, un intervalle de temps entre les changements de voie est inférieur à une valeur seuil, et un cas où le changement de voie est effectué à une distance prédéterminée avant un carrefour ; et
les moyens de génération de chemin de circulation intra-parc de stationnement sélectionnent comme place de stationnement (85) où le véhicule (5) doit être garé une place de stationnement ayant un total minimal des coûts de voie parmi les places de stationnement vides, dans lequel le total des coûts de voie pour chaque place de stationnement vide comporte à la fois les coûts du déplacement du véhicule vers la place de stationnement vide respective et les coûts du déplacement à pied depuis la place de stationnement vide respective en tenant compte du parcours de marche.
